(19) **Europäisches Patentamt / European Patent Office / Office européen des brevets**

(11) **EP 4 772 969 A1**

(12) **EUROPEAN PATENT APPLICATION**
published in accordance with Art. 153(4) EPC

(43) Date of publication:
**08.07.2026 Bulletin 2026/28**

(21) Application number: **24868443.3**

(22) Date of filing: **17.07.2024**

(51) International Patent Classification (IPC):
*G06F 3/01* (2006.01)     *G06F 3/00* (2006.01)
*G06F 3/0484* (2022.01)

(52) Cooperative Patent Classification (CPC):
**G06F 3/00; G06F 3/01; G06F 3/0484**

(86) International application number:
**PCT/KR2024/010268**

(87) International publication number:
**WO 2025/063461 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 KR 20230125847**

(71) Applicant: **Samsung Electronics Co., Ltd.
Suwon-si, Gyeonggi-do 16677 (KR)**

(72) Inventors:
• **JANG, Jeongrok**
  **Suwon-si, Gyeonggi-do 16677 (KR)**
• **JO, Kunhee**
  **Suwon-si, Gyeonggi-do 16677 (KR)**

(74) Representative: **Appleyard Lees IP LLP
G Mill
Dean Clough Industrial Park
Halifax HX3 5AH (GB)**

(54) **ELECTRONIC DEVICE AND METHOD FOR OPERATING SAME**

(57) An electronic device and an operating method thereof are provided. The electronic device includes memory storing one or more instructions, and one or more processors configured to execute the one or more instructions stored in the memory, and the one or more processors are configured to execute the one or more instructions to receive a user input corresponding to information on a gesture to be changed and a change application scope of the gesture. Based on the information on the gesture and information on an action corresponding to the gesture, the one or more processors obtain information on a plurality of candidate gestures corresponding to gestures set by other users for activating the action. Based on the information on the plurality of candidate gestures and the change application scope, the one or more processors provide a recommended gesture corresponding to the action.

FIG. 1

EP 4 772 969 A1

## Description

### Technical Field

Various embodiments disclosed herein relate to an electronic device and an operating method thereof, and more particularly, to an electronic device for recognizing a user's gesture and an operating method of the electronic device.

### Background Art

Recent electronic devices may provide a gesture recognition service for recognizing a user's gestures and perform actions corresponding to the recognized user's gestures. For example, a user may predefine specific gestures and actions corresponding to the specific gestures in an electronic device. When the electronic device recognizes that a user's gesture input thereto is a predefined gesture, the electronic device may perform an action corresponding to the predefined gesture.

However, when a gesture that has not been predefined is input to the electronic device, the electronic device may fail to recognize a corresponding gesture. In addition, in a case where a user is unable to perform predefined gestures on an electronic device due to physical limitations of the user or environmental constraints, there is a problem in that the user cannot utilize a gesture recognition service.

### Disclosure of Invention

### Solution to Problem

An electronic device according to an embodiment of the present disclosure includes memory storing one or more instructions, and one or more processors configured to execute the one or more instructions stored in the memory, and the one or more processors are configured to execute the one or more instructions to receive a user input corresponding to information on a gesture to be changed and a change application scope of the gesture. The one or more processors are configured to execute the one or more instructions to, based on the information on the gesture and information on an action corresponding to the gesture, obtain information on a plurality of candidate gestures corresponding to gestures set by another user for activating the action. The one or more processors are configured to execute the one or more instructions to, based on the information on the plurality of candidate gestures and the change application scope, provide a recommended gesture corresponding to the action.

An operating method of an electronic device, according to an embodiment of the present disclosure, includes receiving a user input corresponding to information on a gesture to be changed and a change application scope of the gesture, obtaining, based on the information on the gesture and information on an action corresponding to the gesture, information on a plurality of candidate gestures corresponding to gestures set by another user for activating the action, and providing a recommended gesture corresponding to the action, based on the information on the plurality of candidate gestures and the change application scope.

### Brief Description of Drawings

FIG. 1 is a diagram illustrating an operation in which an electronic device provides a gesture recognition service, according to an embodiment.
FIG. 2 is schematic block diagram of an electronic device and a server, according to an embodiment.
FIG. 3 is a diagram illustrating an example of a gesture database (DB) and an action DB, according to an embodiment.
FIG. 4 is a diagram illustrating an example of a candidate action list and a candidate gesture list, according to an embodiment.
FIG. 5 is a flowchart of an operating method, performed by an electronic device, for modifying a gesture, according to an embodiment.
FIG. 6 is a diagram illustrating an example of an operation in which an electronic device provides recommended gestures for a gesture to be changed, according to an embodiment.
FIG. 7 is a diagram illustrating an example of an operation in which an electronic device provides recommended gestures for a gesture to be changed, according to an embodiment.
FIG. 8 illustrates an example of a user interface (UI) displaying a gesture settings screen, according to an embodiment.
FIG. 9 illustrates an example of a UI for inquiring about change application information of a gesture to be changed, according to an embodiment.

FIG. 10 illustrates an example of a UI for inquiring about a gesture to be changed, according to an embodiment.

FIG. 11 illustrates an example of a UI for providing recommended gestures for a gesture to be changed, according to an embodiment.

FIG. 12 is a flowchart of an operating method, performed by an electronic device, for performing a change in a shape of a gesture, a change in attributes of the gesture, or a change in an action, according to an embodiment.

FIG. 13 illustrates an example of a UI through which an electronic device inquires about a type of modification for a gesture, according to an embodiment.

FIG. 14 is a flowchart of an operating method, performed by an electronic device, for changing a shape of a gesture, according to an embodiment.

FIG. 15 is a flowchart of an operating method, performed by an electronic device, for recommending an existing gesture, according to an embodiment.

FIG. 16 is a flowchart of an operating method, performed by an electronic device, for obtaining a new gesture from a user, according to an embodiment.

FIG. 17 is a diagram illustrating results of an electronic device determining similarities of gestures, according to an embodiment.

FIG. 18A is a flowchart of an operating method, performed by an electronic device, for changing attributes of a gesture, according to an embodiment.

FIG. 18B is a diagram illustrating attributes of gestures stored in an electronic device, according to an embodiment.

FIG. 19 is a flowchart of an operating method, performed by an electronic device, for changing an action, according to an embodiment.

FIG. 20 is a flowchart illustrating operations of an electronic device and a server, according to an embodiment.

FIG. 21 is a detailed block diagram of an electronic device according to an embodiment.

## Mode for the Invention

Throughout the present disclosure, the expression "at least one of a, b or c" indicates only a, only b, only c, both a and b, both a and c, both b and c, all of a, b, and c, or variations thereof.

An embodiment of the present disclosure will be described more fully hereinafter with reference to the accompanying drawings so that the embodiment may be easily implemented by one of ordinary skill in the art. However, the present disclosure may be implemented in different forms and should not be construed as being limited to embodiments set forth herein.

Terms used herein are described using general terms currently used by taking into account functions described in the present disclosure, but may have various other meanings according to an intention of a skilled person in the art, precedent cases, advent of new technologies, etc. Thus, the terms used herein should be defined not by simple appellations thereof but based on the meaning of the terms together with the overall description of the present disclosure.

In addition, the terms used herein are only used to describe a particular embodiment, and are not intended to limit the present disclosure.

Throughout the specification, when a part "includes" or "comprises" an element, unless there is a particular description contrary thereto, it is understood that the part may further include other elements, not excluding the other elements. In addition, terms such as "... unit", "module", etc., described in the specification refer to a unit for processing at least one function or operation and may be implemented as hardware or software, or a combination of hardware and software.

Embodiments will be described more fully hereinafter with reference to the accompanying drawings so that they may be easily implemented by one of ordinary skill in the art. However, the present disclosure may be implemented in different forms and should not be construed as being limited to the embodiments set forth herein. In addition, parts not relevant to descriptions of the present disclosure are omitted in the drawings to clearly explain the present disclosure, and like reference numerals denote like elements throughout the specification.

In an embodiment of the present specification, the term "user" refers to a person who controls a system, a function, or an operation, and may include a developer, an administrator, or an installation technician.

Hereinafter, the present disclosure will be described in detail with reference to the accompanying drawings.

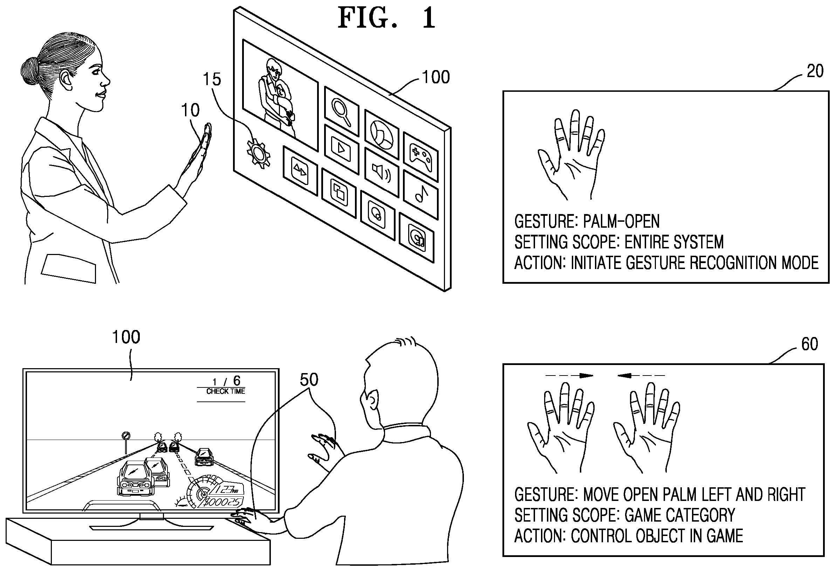

FIG. 1 is a diagram illustrating an operation in which an electronic device provides a gesture recognition service, according to an embodiment.

Referring to FIG. 1, an electronic device 100 according to an embodiment of the present disclosure may provide a gesture recognition service. According to an embodiment of the present disclosure, a gesture recognition service may be a service for recognizing a user's gesture and providing an action corresponding to the recognized gesture. A user of the electronic device 100 may control the electronic device 100 through a gesture to perform an action corresponding to the gesture without using a separate input device. The action corresponding to the gesture is an action activatable by the gesture and may include one or more operations that may be activated according to recognition of the gesture.

The electronic device 100 may include at least one of a television (TV), a smartphone, a tablet personal computer (PC), a digital camera, a camcorder, a laptop computer, a desktop, an e-book reader, a digital broadcasting terminal, a personal digital assistant (PDA), a portable multimedia player (PMP), a navigation device, an MP3 player, a wearable device, a smart watch, a home network system, a security system, a medical device, a head-mounted display (HMD), a hemispherical display, a large display, and a projector display.

According to an embodiment of the present disclosure, the electronic device 100 may be equipped with an operating system (or OS) and an Internet access function. In this case, the electronic device 100 may be referred to as a smart TV or an Internet TV. In addition to outputting real-time broadcast programs, which is an inherent function of a TV, the electronic device 100 may execute various types of applications by using the operating system installed therein. Various types of applications may be installed on the electronic device 100 by default. Alternatively, the electronic device 100 may, under a user's control, access the Internet, search for applications requested by the user, and install the applications. By executing the applications, the electronic device 100 may provide various services provided by the applications. The applications may include various categories, types, attributes, classes, genres, etc. For example, the applications may include a game category application that provides game content, an over-the-top (OTT) category application that provides video on demand (VOD) content, a music category application that provides music content, etc. In the present disclosure, a 'category application' may include one or more applications whose types or attributes correspond to a specific category.

According to an embodiment of the present disclosure, the electronic device 100 may provide personalized gestures for each user of the electronic device 100. For example, the electronic device 100 may store information on predefined gestures. For example, the electronic device 100 may store predefined gestures and actions respectively corresponding thereto, by mapping the predefined gestures to the actions., to the predefined gestures. A user may preset various gestures for controlling the electronic device 100 and actions corresponding to the gestures.

In addition, according to an embodiment of the present disclosure, the electronic device 100 may store a setting scope in which predefined gestures are set, together with information on the predefined gestures. In the present disclosure, the setting scope may refer to a system range in which an action corresponding to a prestored gesture is set to be activated.

For example, the setting scope may include a system-wide scope (or the entire system), a category application scope, or an individual application scope of the electronic device 100. For example, the setting scope of a gesture narrows in the order of system-wide scope, category application scope, and individual application scope . For example, an individual application scope may refer to an individual application, a category application scope may refer to an individual category application such as a game category or an OTT category, and a system-wide scope may refer to all applications executable on the electronic device 100, including a game category application, an OTT category application, a music category application, and the like. In the present disclosure, the system-wide scope may refer to a scope controllable by the operating system installed in the electronic device 100. For example, the system-wide scope may include the electronic device 100 itself and a combination of all hardware and software included in the electronic device 100. For example, a gesture set within the system-wide scope (or for the entire system) may be used to control the electronic device 100 itself, all hardware and software included in the electronic device 100, and all executable applications through the operating system installed in the electronic device 100.

In an embodiment of the present disclosure, a gesture set within a system-wide scope may be used to select and manipulate user interface (UI) components such as menus, icons, items, and widgets, or to control operations such as power control, volume adjustment, and channel switching. In addition, a gesture set within the system-wide scope may be used to execute or control various applications installed on the electronic device 100. In an embodiment, an action corresponding to a gesture may include an operation of selecting and manipulating a UI component, an operation such as power control, volume adjustment, or channel switching, or an operation of executing or controlling various applications installed on the electronic device 100.

For example, the electronic device 100 may store information on a palm-open gesture 10, information on an action mapped to the palm-open gesture 10, and a setting scope of the palm-open gesture 10 (operation 20). For example, when the electronic device 100 obtains the palm-open gesture 10 via a sensor, the electronic device 100 may perform an operation of initiating a gesture recognition mode. For example, because the palm-open gesture 10 is set within the system-wide scope, the electronic device 100 may perform an action corresponding to the gesture 10 in various situations, such as when outputting a UI screen such as a home screen or a settings screen, outputting a broadcast program, or executing applications of various categories.

In an embodiment of the present disclosure, a gesture set within a category application scope may be used to control the electronic device 100 only when a specific category application is executed. For example, the electronic device 100 may store information on a gesture 50 of moving an open palm left and right, information on an action mapped to the gesture 50, and a setting scope of the gesture 50 (operation 60). For example, when the electronic device 100 obtains the gesture 50 of moving an open palm left and right through a sensor, the electronic device 100 may control an object within a game. For example, because the gesture 50 is set to be limited to a game category application scope, the electronic device 100 may perform an action corresponding to the gesture 50 only while a game category application is running. For example, the electronic device 100 may not perform the action corresponding to the gesture 50 while an OTT category application is running.

In an embodiment of the present disclosure, a gesture set at an individual application scope may be used to control the electronic device 100 only when a specific application is executed. For example, when a first gesture set in a first game app and an action corresponding thereto are stored in the electronic device 100, the electronic device 100 may not perform the action corresponding to the first gesture while a second game app is running.

In an embodiment of the present disclosure, the electronic device 100 may modify a predefined gesture to another gesture desired by a user. For example, the electronic device 100 may change a predefined gesture to another shape of gesture desired by the user, or change attributes of the predefined gesture. For example, the attributes of a gesture may include a recognition interval duration of the gesture, a movement direction of the gesture, or whether the gesture is combined with a previous gesture. In addition, for example, the electronic device 100 may modify an action corresponding to the predefined gesture to another action desired by the user. For example, the electronic device 100 may output a gesture modification screen that provides a gesture modification function based on a user input for selecting a settings item 15 displayed on a home screen. Alternatively, for example, the electronic device 100 may output a gesture modification screen based on the user's voice input requesting the gesture modification screen.

In an embodiment of the present disclosure, when a user modifies a predefined gesture, the user may select a change application scope for the gesture to be changed. In the present disclosure, a gesture to be changed may refer to a gesture to be changed by the user. The gesture to be changed may correspond to a predefined gesture. In the present disclosure, a change application scope may refer to a setting scope to which a change to a gesture to be changed is to be applied. For example, the change application scope may include any one of the entire system, a category application, or an individual application. For example, the user may select the change application scope as the entire system so that a change to a gesture is reflected across the entire system, select it as a specific category application so that the change to the gesture is reflected only in the specific category application, or select it as a specific application so that the change to the gesture is reflected only in the specific application.

The electronic device 100 may obtain, based on a user input, a gesture to be changed and a change application scope for the gesture. The electronic device 100 may be configured so that a change to the gesture is reflected only within the obtained scope. The electronic device 100 may maintain an existing gesture, rather than a changed gesture, outside the obtained scope. For example, when a user wishes to change the palm-open gesture 10 to another shape of gesture (e.g., a fist-clenching gesture (hereinafter, a fist gesture), the user may select an OTT category application as the change application scope so that change information of the gesture is reflected only within the OTT category application. In this case, the electronic device 100 may initiate a gesture recognition mode in response to the fist gesture only when the OTT category application is executed. When executing an application (e.g., a game application) other than the OTT category application, the electronic device 100 may still initiate the gesture recognition mode through the palm-open gesture 10.

In an embodiment of the present disclosure, when a user modifies a predefined gesture to another gesture, the electronic device 100 may provide a recommended gesture to the user. For example, the recommended gesture may include a candidate gesture set for a corresponding action by a user of another electronic device, other than the user of the electronic device 100. A candidate gesture may be a gesture set for the corresponding action by a user of another electronic device. For example, the electronic device 100 may assign a priority to (or prioritize) one or more candidate gestures for the corresponding action and provide a recommended gesture customized for the user of the electronic device 100.

Furthermore, in an embodiment of the present disclosure, the electronic device 100 may provide a recommended action to the user when the user changes an action corresponding to a predefined gesture to another action. For example, the recommended action may include a candidate action set for the corresponding gesture by a user of another electronic device, other than the user of the electronic device 100. A candidate action may be an action set for the gesture by a user of another electronic device. For example, the electronic device 100 may prioritize one or more candidate actions for the gesture and provide a recommended action customized for the user of the electronic device 100.

Moreover, in an embodiment of the present disclosure, a user may also change a setting scope of a predefined gesture. For example, the user may change the setting scope of the palm-opening gesture 10 to a game category application rather than the entire system. In this case, the electronic device 100 initiates a gesture recognition mode through the palm-open gesture 10 only when the game category application is executed and may not perform the operation of initiating the gesture recognition mode during other operations, even when the palm-open gesture 10 is recognized.

According to an embodiment of the present disclosure, because the electronic device 100 allows a user to modify a gesture as desired, the electronic device 100 may provide personalized gestures for each user. Accordingly, this may resolve a problem in that a user is unable to change a gesture defined in the electronic device 100 as desired. Furthermore, the electronic device 100 may recommend a gesture to be changed or an action to be modified to a user of the electronic device 100 by taking into account setting histories of other users. Accordingly, an interaction between the electronic device 100 and the user may be enhanced. In addition, user convenience for the electronic device 100 may be increased.

Although FIG. 1 illustrates the electronic device 100 as including a display, the present disclosure is not limited thereto. For example, the electronic device 100 may be a device that provides content to an external display device including a display. The content may include, but is not limited to, images, videos, audio, text, games, applications, etc. The electronic device 100 may include a set-top box (STB), a Blu-ray disk player, a digital versatile disk (DVD) player, a game device, a digital camera, a camcorder, a streaming device, a home theater, and the like. In this case, the electronic device 100 may be connected to the external display device through an input/output (I/O) interface such as a high-definition multimedia interface (HDMI) port, and configured to transmit video/audio signals to the external display device. Alternatively, the electronic device 100 may be connected to the external display device via wired communication, short-range wireless communication such as wireless local area network (WLAN), Wi-Fi, or Bluetooth, or long-range wireless communication.

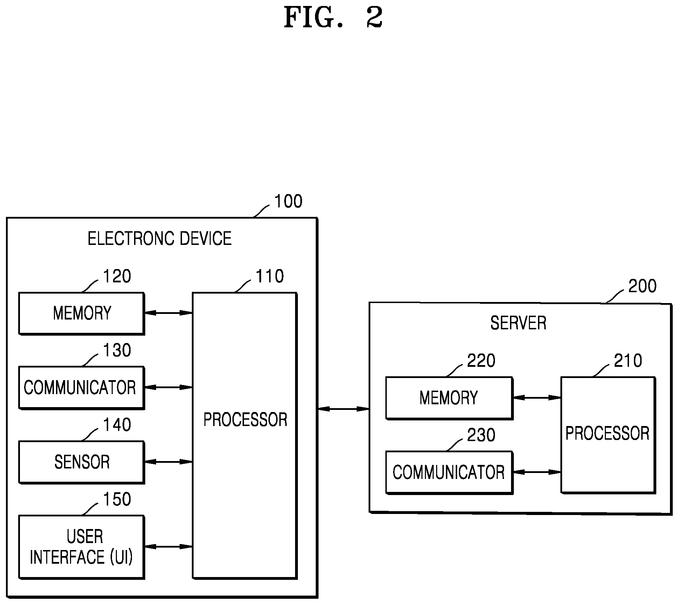

FIG. 2 is schematic block diagram of an electronic device and a server, according to an embodiment.

Referring to FIG. 2, the electronic device 100 may include a processor 110, a memory 120, a communicator 130, a sensor 140, and a user interface (UI) 150. However, the electronic device 100 may be implemented by more or fewer components than those illustrated in FIG. 2, and is not limited to the example described above.

The memory 120 may store programs necessary for processing or control by the processor 110, and store data input to or output from the electronic device 100. The memory 120 may include at least one type of storage medium among a flash memory-type memory, a hard disk-type memory, a multimedia card micro-type memory, a card-type memory (e.g., a Secure Digital (SD) or eXtreme Digital (xD) memory), random access memory (RAM), static RAM (SRAM), read-only memory (ROM), electrically erasable programmable ROM (EEPROM), PROM, magnetic memory, a magnetic disc, or an optical disc.

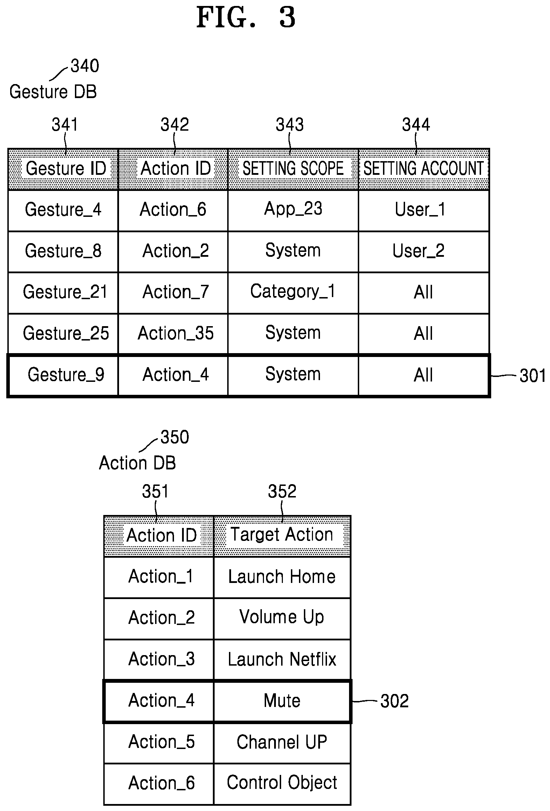

In an embodiment of the present disclosure, the memory 120 may store information regarding gestures defined by a user in the electronic device 100 and information regarding actions respectively mapped to the gestures. The memory 120 may also store, along with the information on the gestures and the information on the actions, at least one of information on a setting scope of the gestures, information on a setting account for the gestures, and information on a duration of the gestures. In an embodiment of the present disclosure, the memory 120 may store the above-described information in a gesture database (DB) and an action DB, as described with reference to FIG. 3.

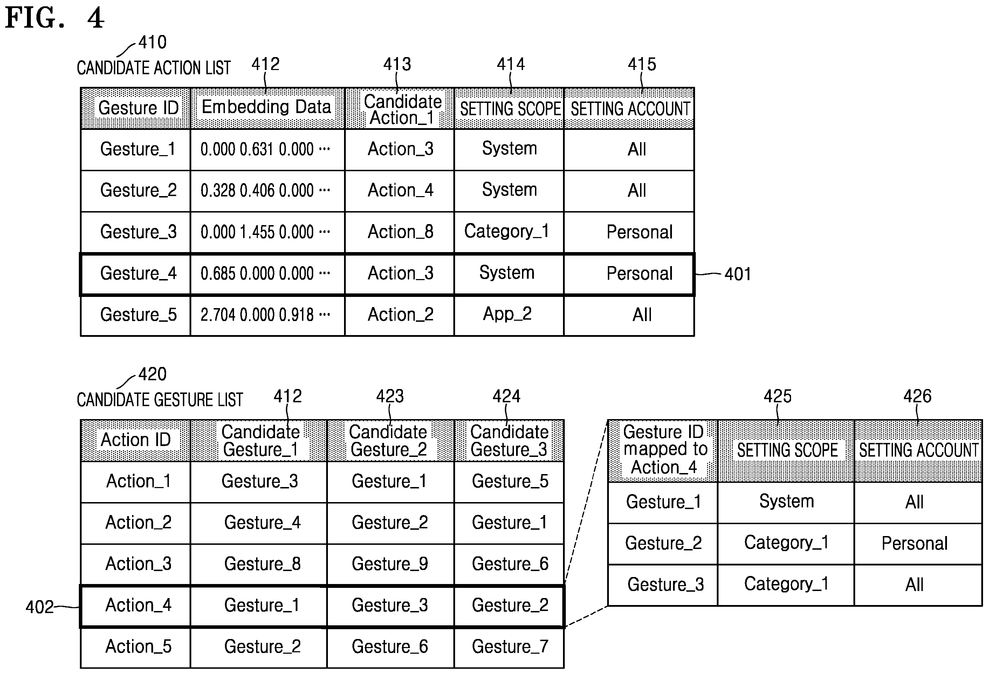

In an embodiment of the present disclosure, the memory 120 may store one or more candidate actions representing information on actions set for a gesture by another user. The one or more candidate actions may include actions that another user has set with a high frequency for the gesture. The memory 120 may also store at least one of information on a setting scope of the one or more candidate actions, information on a setting account for the one or more candidate actions, or information on a duration of the one or more candidate actions. The memory 120 may store the above-described information in a candidate action list 410, as described with reference to FIG. 4.

In an embodiment of the present disclosure, the memory 120 may store one or more candidate gestures representing information on gestures set for an action by another user. The one or more candidate gestures may include gestures that another user has set with a high frequency for the action. The memory 120 may also store at least one of information on a setting scope of the one or more candidate gestures, information on a setting account for the one or more candidate gestures, or information on a duration of the one or more candidate gestures. Information on gestures and the like stored in the memory 120 may be periodically updated by the processor 110. The memory 120 may store the above-described information in a candidate gesture list 420, as described with reference to FIG. 4.

The processor 110 controls all operations of the electronic device 100. For example, the processor 110 may perform functions of the electronic device 100 by executing one or more instructions stored in the memory 120. In this case, the memory 120 may store the one or more instructions that are executable by the processor 110. Furthermore, the processor 110 may store one or more instructions in an internal memory provided therein, and execute the one or more instructions stored in the internal memory to control the above-described operations to be performed. In other words, the processor 110 may execute at least one instruction or program stored in the internal memory provided therein or the memory 120 to perform certain operations.

The processor 110 may include one or more processors. In this case, the one or more processors may be a general-purpose processor such as a central processing unit (CPU), an application processor (AP), or a digital signal processor (DSP), a dedicated graphics processor such as a graphics processing unit (GPU) or a vision processing unit (VPU), or a dedicated artificial intelligence (AI) processor such as a neural processing unit (NPU). When the one more processors are a dedicated AI processor, the dedicated AI processor may be designed with a hardware structure specialized for processing a particular AI model.

Under the control of the processor 110, the communicator 130 may transmit and receive data or signals to and from external devices, peripheral devices, servers, display devices, etc. For example, the communicator 350 may include a Wi-Fi module, a Bluetooth module, an infrared communication module, a wireless communication module, a LAN module, an Ethernet module, a wired communication module, and the like. In this case, each communication module may be implemented in the form of at least one hardware chip. The Wi-Fi module and the Bluetooth module perform communications according to a Wi-Fi method and a Bluetooth method, respectively. When the Wi-Fi module or the Bluetooth module are used, various types of connection information such as a service set identifier (SSID) and a session key may be first transmitted and received, a communication connection may be established using the connection information, and then various types of information may be transmitted and received. The wireless communication module may include at least one communication chip for performing communication according to various communication standards such as ZigBee, 3rd generation (3G), 3rd Generation Partnership Project (3GPP), long-term evolution (LTE), LTE Advanced (LTE-A), 4th generation (4G), 5th generation (5G), etc.

In an embodiment of the present disclosure, by periodically transmitting, to a server 200, gestures defined by a user on the electronic device 100 and actions mapped to the gestures, the communicator 130 may update information on the gestures and information on the actions. In addition, the communicator 130 may transmit to the server 200, along with the information on the gestures and the information on the actions, at least one of information on a setting scope of the gestures, information on a setting account for the gestures, and information on a duration of the gestures.

In an embodiment of the present disclosure, the communicator 130 may periodically receive, from the server 200, one or more candidate actions representing information on actions set for a gesture by another user. The one or more candidate actions may include actions having a high mapping frequency for each gesture. The communicator 130 may periodically receive, from the server 200, one or more candidate gestures representing information on gestures set for an action by another user. The one or more candidate gestures may include a gesture having a high mapping frequency for each action. Furthermore, the communicator 130 may receive, from the server 200, at least one of information on a setting scope of the one or more candidate gestures, information on a setting account for the one or more candidate gestures, or information on a duration of the one or more candidate gestures. The communicator 130 may periodically exchange data with the server 200 through background operations.

The sensor 140 may detect the presence, location, and type of user operations, such as spatial gestures, touches, and other user interactions. For example, the sensor 140 may include one or more sensors. For example, the sensor 140 may include a distance sensor, an image sensor, a gesture sensor, an ambient light sensor, a gyro sensor, etc. For example, the distance sensor may include various types of sensors for detecting a distance between the electronic device 100 and a user, such as an ultrasound sensor, an infrared radiation (IR) sensor, and a time of flight (ToF) sensor. For example, the image sensor may include a camera, capture an image of a user through the camera, convert the captured image into sensing data, and transmit the sensing data to the processor 110. When the sensor 140 includes two or more cameras, the sensor 140 may recognize gestures by using various other sensors, such as a ToF sensor or a three-dimensional (3D) camera.

The sensor 140 may not be built into the electronic device 100, but may be implemented as a camera on a terminal connected to the electronic device 100, a camera connected via a Universal Serial Bus (USB), a sensor, or a nearby Internet of Things (IoT) device. For example, when a user performs a gesture while holding a remote control or external device equipped with a gyro sensor in their hand, the gyro sensor may recognize the user's gesture. Alternatively, when the user performs a gesture while wearing wearable devices such as a watch, a bracelet, and a ring, the wearable devices may recognize the user's gesture.

The UI 150 may include an input interface and/or an output interface. The UI 150 may receive a user input under the control of the processor 110. The UI 150 may include, as the input interface, at least one of a keypad, a dome switch, a touch pad (a capacitive overlay type, a resistive overlay type, an infrared beam type, a surface acoustic wave type, an integral strain gauge type, a piezoelectric type, etc.), a jog wheel, or a jog switch, but is not limited thereto. The UI 150 may include a microphone. The microphone may receive an acoustic signal from an external device or a speaker (a user of the electronic device 100). The microphone may receive the acoustic signal and convert the received acoustic signal into audio data. The microphone may be embedded into the electronic device 100 or may be provided separately in the remote control.

The UI 150 may, under the control of the processor 110, output images or data processed in the electronic device 100. The UI 150 may include a display as the output interface.

According to an embodiment of the present disclosure, the UI 150 may receive a user input for modifying a gesture. According to an embodiment of the present disclosure, the UI 150 may receive a user input regarding a change application scope in which a change to the gesture is to be reflected. According to an embodiment of the present disclosure, the UI 150 may receive a user input for selecting a gesture to be changed. According to an embodiment of the present disclosure, the UI 150 may display a recommended gesture.

According to an embodiment of the present disclosure, the one or more processors 110 may execute one or more instructions to receive a user input regarding information on a gesture to be changed and a change application scope for the gesture. Based on the information on the gesture to be changed and information on an action activatable by the gesture, the one or more processors 110 obtain one or more candidate gestures corresponding to gestures set by another user to activate the action. Based on the one or more candidate gestures and the change application scope, the one or more processors 110 provide a recommended gesture for the action.

According to an embodiment of the present disclosure, the electronic device 100 may modify a gesture as desired by the user, thereby providing personalized gestures for each user. Furthermore, the electronic device 100 may recommend a gesture to be changed or an action to be modified to a user of the electronic device 100 by taking into account setting histories of other users.

Moreover, in an embodiment, the electronic device 100 may execute a gesture recommendation function by collecting setting histories of other users for gestures and actions within the electronic device 100 itself, without interworking with a separate server. For example, in an embodiment, the electronic device 100 may provide a gesture recommendation function in an on-device manner.

The server 200 may include a processor 210, memory 220, and a communicator 230.

The processor 210 controls all operations of the server 200. For example, the processor 210 may perform functions of the server 200 by executing one or more instructions stored in the memory 220.

The memory 220 may store programs necessary for processing or control by the processor 210, and store data input to or output from the server 200.

In an embodiment of the present disclosure, the memory 220 may store one or more candidate actions representing information on actions set for a gesture by another user. The memory 220 may store one or more candidate gestures representing information on gestures set for an action by another user. The memory 220 may also store at least one of information on a setting scope of the one or more candidate gestures, information on a setting account for the one or more candidate gestures, or information on a duration of the one or more candidate gestures. information on gestures and the like stored in the memory 220 may be periodically updated by the processor 210.

The communicator 230 may include one or more modules that enable wireless communication between the server 200 and a network where the electronic device 100 is located. The communicator 230 may transmit and receive data or signals to and from the electronic device 100.

In an embodiment of the present disclosure, the communicator 230 may periodically receive, from the electronic device 100, gestures defined by a user of the electronic device 100 and actions mapped to the gestures. In addition, the communicator 230 may receive from the electronic device 100, along with information on the gestures and information on the actions, at least one of information on a setting scope of the gestures, information on a setting account for the gestures, and information on a duration of the gestures.

In an embodiment of the present disclosure, the communicator 230 may periodically receive, from each of a plurality of electronic devices, gestures defined by a user of each electronic device and actions mapped to the gestures. Based on information on gestures and information on actions respectively received from the plurality of electronic devices, the processor 210 may identify actions having a high mapping frequency for each gesture and update candidate actions in descending order of mapping frequency. In addition, the processor 210 may identify gestures having a high mapping frequency for each action and update candidate gestures in descending order of mapping frequency.

In an embodiment of the present disclosure, the communicator 230 may periodically transmit, to the electronic device 100, one or more candidate actions representing information on actions set for a gesture by another user. The one or more candidate actions may include actions having a high mapping frequency for each gesture. The communicator 230 may periodically transmit, to the electronic device 100, one or more candidate gestures representing information on gestures set for an action by another user. The one or more candidate gestures may include a gesture having a high mapping frequency for each action. Furthermore, the communicator 230 may transmit, to the electronic device 100, at least one of information on a setting scope of the one or more candidate gestures, information on a setting account for the one or more candidate gestures, or information on a duration of the one or more candidate gestures.

FIG. 3 is a diagram illustrating an example of a gesture DB and an action DB, according to an embodiment.

Referring to FIG. 3, the electronic device 100 may store a gesture DB 340 and an action DB 350 in the memory 120.

The gesture DB 340 may include information 341 on gestures defined by a user on the electronic device 100 and information 342 on actions mapped to the gestures. The gesture DB 340 may include at least one of information 343 on a setting scope of the gestures, information 344 on a setting account for the gestures, and information on a duration of the gestures. The gesture DB 340 may further include embedding data representing characteristics of the gestures. The electronic device 100 may recognize a shape of each gesture, attributes of each gesture, and the like through the embedding data stored in the gesture DB 340

The gesture DB 340 may store the information 341 on the gestures as gesture IDs and the information 342 on the actions as action IDs. The gesture DB 340 may store the information 343 on the setting scope of the gestures as System, Category_#, App_#, and the like. Here, System may denote an entire system of the electronic device 100, Category_# may denote a specific category application running on the electronic device 100, and App_# may denote a specific application running on the electronic device 100. The gesture DB 340 may store the information 344 on the setting account for the gestures as All, User_#, and the like. Here, All may denote all user accounts registered on the electronic device 100, and User_# may denote a specific user account registered on the electronic device 100.

For example, the information 341 on the gestures may include one-hand gestures such as a thumb-up gesture (raising the thumb while clenching the fist), an index-finger-up gesture (raising the index finger while clenching the fist), a palm-open gesture, and a fist gesture. Alternatively, the information 341 on the gestures may include two-hand gestures or gestures using body parts other than the hands. Furthermore, for example, the information 341 on the gestures may include not only static gestures, but also motion gestures such as swiping, zoom-in, and zoom-out gestures. In addition, the information 341 on the gestures may further include attribute information of the gestures in addition to shape information of the gestures. For example, attribute information of each gesture may include a recognition interval duration of a gesture, a movement direction of the gesture, or a combination with a previous gesture. For example, the information 341 on the gestures may include a gesture of maintaining an open palm for 5 seconds, a gesture of moving the open palm left and right, or a gesture of maintaining the open palm for 5 seconds and then moving it up and down.

The action DB 350 may include information on actions mapped to the gestures set on the electronic device 100. For example, the action DB 350 may include information 351 on the actions and target actions 352. The target actions 352 may include functions or services that can be performed on the electronic device 100.

The action DB 350 may store the information 351 on the actions as action IDs, and include various functions, such as Launch Home, Volume Up, Launch Netflix, Channel Up, Mute, and Control Object, as the target actions 352. For example, the functions such as Launch Home, Volume Up, Launch Netflix, Channel Up, and Mute may be set for the entire system, a category application, an application, or the like as scopes controllable through the operating system installed on the electronic device 100. For example, the function of Control Object may controls characters or objects of a specific application running on the electronic device 100, and thus may be mainly set for a game category application, a game application, and the like.

For example, referring to 301 of the gesture DB 340, Gesture_9 (e.g., a fist gesture) is mapped to Action_4. Gesture_9 may be set system-wide. Gesture_9 may be set for all users. Referring to 302 of the action DB 350, Action_4 represents a 'Mute' function. Accordingly, when the electronic device 100 obtains the fist gesture, it may perform a 'Mute' operation. Because the fist gesture is set system-wide, the electronic device 100 may perform the Mute operation corresponding to the fist gesture in various situations, such as when outputting a UI screen such as a home screen or a settings screen, outputting a broadcast program, or executing applications of various categories. Because the fist gesture is set for all the users, the electronic device 100 may provide the Mute operation corresponding to the fist gesture to users of all accounts registered on the electronic device 100.

Alternatively, for example, in the gesture DB 340, Gesture_21 may be mapped to Action_7, and Gesture_21 may be set for Category_1. For example, Category_1 may correspond to a game category application. The electronic device 100 may perform an operation corresponding to Gesture_21 only when a game category application is executed.

Alternatively, for example, in the gesture DB 340, Gesture_4 may be mapped to Action_3, and Gesture_4 may be set for App_23. For example, App_23 may be a game app. The electronic device 100 may perform an operation corresponding to Gesture_4 only when the game app is executed. Furthermore, Gesture_4 may be set for User_1. The electronic device 100 may perform the operation corresponding to Gesture_4 only when the electronic device 100 is being operated under the first user account.

FIG. 4 is a diagram illustrating an example of a candidate action list and a candidate gesture list, according to an embodiment.

Referring to FIG. 4, the electronic device 100 may store a candidate action list 410 and a candidate gesture list 420 in the memory 120.

The candidate action list 410 may store one or more candidate actions representing information on actions set for a gesture by another user. The one or more candidate actions may include actions that another user have set with a high frequency for the gesture. The candidate action list 410 may be periodically received from the server 200. The server 200 may update the candidate action list 410 by identifying actions that are mapped to each gesture at a high frequency based on the gesture DB 340 of the electronic device 100 and a gesture DB of an external electronic device.

The candidate action list 410 may include embedding data 412 corresponding to gestures, candidate actions 413 for the gestures, information 414 on a setting scope of the candidate actions, and information 415 on a setting account for the candidate actions. Furthermore, the candidate action list 410 may further include information on a duration of the candidate actions.

The embedding data 412 corresponding to a gesture may be represented as embedding data indicating characteristics of the gesture. The embedding data may vary depending on a form and attributes of a gesture. The candidate action list 413 for the gestures may include one or more candidate actions for each gesture. The candidate actions 413 for the gestures may be stored as action IDs. In FIG. 4, the candidate action list 410 is illustrated as having one candidate action for each gesture, but is not limited thereto. The candidate action list 410 may have more than one candidate action for each gesture. The information 414 on the setting scope of the candidate actions may be stored as System, Category_#, App_#, and the like. Here, System, Category_#, and App_# respectively indicate that other users have histories of setting actions corresponding to gestures for the entire system, a specific category application, and a specific application. The information 415 on the setting account for the candidate actions may be stored as All, Personal, and the like. Here, All and Personal respectively indicate that other users have histories of setting actions corresponding to gestures for all user accounts and an individual user account. Information on a duration of the candidate actions may include information on whether other users have set the actions corresponding to gestures to persist permanently or temporarily.

For example, referring to 401 of the candidate action list 410, Gesture_4 may have Action_3 as a candidate action. Action_3, which is a candidate action for Gesture_4, has a history of being set system-wide as well as a history of being set for an individual user .

The candidate gesture list 420 may store one or more candidate gestures representing information on gestures set for an action by another user. The one or more candidate gestures may include gestures that another user has set with a high frequency for the action. The candidate gesture list 420 may be periodically received from the server 200. The server 200 may update the candidate gesture list 420 by identifying gestures that are mapped to each action at a high frequency based on the gesture DB 340 of the electronic device 100 and a gesture DB of an external electronic device.

The candidate gesture list 420 may include candidate gestures 422, 423, and 424 for actions, information 425 on a setting scope of the candidate gestures, and information 426 on a setting account of the candidate gestures. Furthermore, the candidate gesture list 420 may further include information on a duration of the candidate gestures.

The candidate gestures 422, 423, and 424 for the actions may include one or more candidate gestures for each action. The candidate gestures 422, 423, and 424 for the actions may be stored as gesture IDs. In FIG. 4, the candidate gesture list 420 is illustrated as having three candidate gestures for each action, e.g., a first candidate gesture 422, a second candidate gesture 423, and a third candidate gesture 424, but is not limited thereto. The candidate gesture list 420 may include more than three candidate gestures or fewer than three candidate gestures for each action. The information 425 on the setting scope of the candidate gestures may be stored as System, Category_#, App_#, and the like. Here, System, Category_#, and App_# respectively indicate that other users have histories of setting gestures corresponding to an action for the entire system, a specific category application, and a specific application. The information 426 on the setting account for the candidate gestures may be stored as All, Personal, and the like. Here, All and Personal respectively indicate that other users have histories of setting gestures corresponding to an action for all user accounts and an individual user account. Information on a duration of the candidate gestures may include information on whether other users have set the gestures corresponding to an action to last permanently or temporarily.

For example, referring to 402 of the candidate gesture list 420, Action_4 may have Gesture_1, Gesture_3, and Gestrue_2 as candidate gestures. Gesture_1, which is the first candidate gesture 422 for Action_4, has a history of being set system-wide as well as a history of being set for all users. Gesture_3, which is the second candidate gesture 423 for Action_4, has a history of being set for Category_1 as well as a history of being set for an individual user. Gesture_2, which is the third candidate gesture 424 for Action_4, has a history of being set for Category_1 as well as a history of being set for all users. For example, Category_1 may correspond to a game category application, but is not limited thereto.

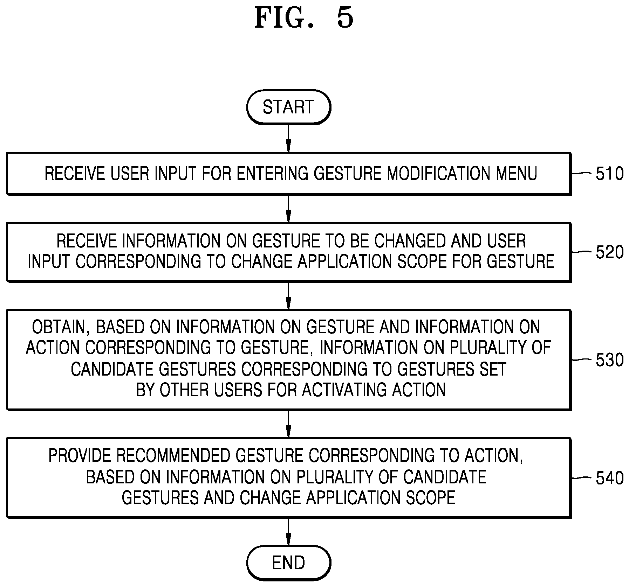

FIG. 5 is a flowchart of an operating method, performed by an electronic device, for modifying a gesture, according to an embodiment.

Referring to FIG. 5, in operation 510, the electronic device 100 may receive a user input for entering a gesture modification menu.

For example, the gesture modification menu may be displayed as a gesture modification screen. For example, the electronic device 100 may receive a user input via the UI 150. The electronic device 100 may display a gesture modification screen based on a user input for entering the gesture modification screen.

In an embodiment, the electronic device 100 may receive a user input for selecting or manipulating UI components, such as menus, icons, items, and widgets. The electronic device 100 may display a gesture modification screen based on the user input. For example, the electronic device 100 may output a gesture settings screen based on a user input for selecting the settings item 15 displayed on the home screen, as shown in FIG. 1. The user may enter the gesture modification screen by selecting UI components through multiple steps or depths.

Alternatively, in an embodiment, the electronic device 100 may receive a user's voice input requesting the gesture modification screen. The electronic device 100 may display the gesture modification screen based on the user's voice input.

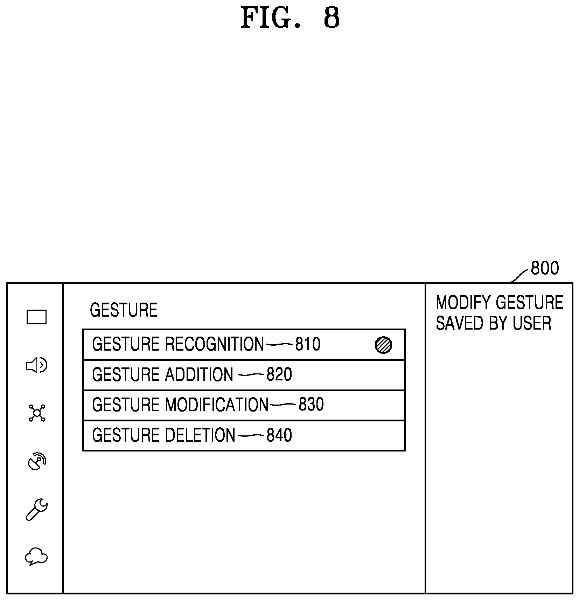

Alternatively, in an embodiment, the electronic device 100 may display the gesture modification screen through settings of a currently running application. For example, the electronic device 100 may display the gesture modification screen based on a user input for selecting a settings item present on the currently running application screen. An example of a UI for entering a gesture modification screen is described with reference to FIG. 8.

In operation 520, the electronic device 100 may receive a user input corresponding to information on a gesture to be changed and a user input corresponding to a change application scope of the gesture. In the present disclosure, a change application scope of a gesture may indicate a setting scope to which a change to the gesture is to be applied. For example, a setting scope may include the entire system of the electronic device 100, a category application scope, or an individual application scope.

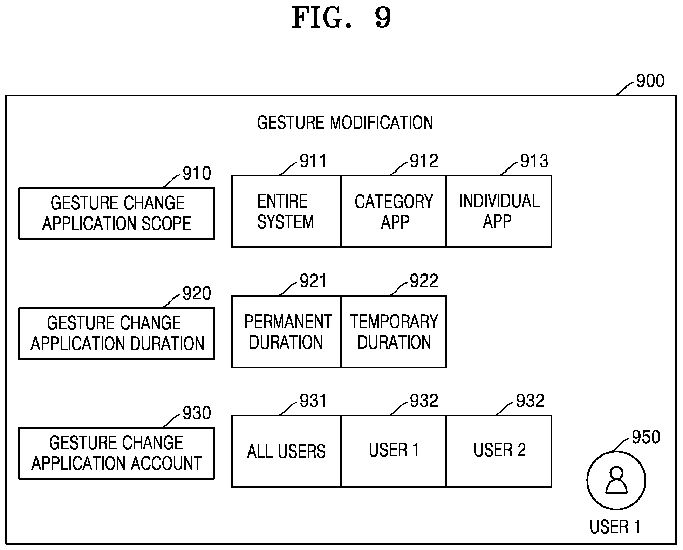

According to an embodiment, the electronic device 100 may display a UI for inquiring the user about the change application scope of the gesture. According to an embodiment, the electronic device 100 may receive a user input regarding the change application scope of the gesture via the UI for inquiring about the change application scope of the gesture. The UI for inquiring about the change application scope of the gesture may be referred to as a 'first gesture modification screen'. A detailed description of the first gesture modification screen is provided with reference to FIG. 9 to be described below.

The system may denote a scope controllable by the operating system installed on the electronic device 100, and include the electronic device 100 itself and a combination of all hardware and software included in the electronic device 100. For example, a gesture set within the system-wide scope may be used to select and manipulate UI components such as menus, icons, items, and widgets, control operations such as power control, volume adjustment, and channel switching, or execute or control various applications installed on the electronic device 100.

The category application scope may represent an individual category application, such as a game category or an OTT category. For example, a gesture set within the category application scope may be used to control the electronic device 100 only when a specific category application is executed.

The individual application scope may refer to an individual application, such as an OTT content app and a game app. For example, a gesture set within the individual application scope may be used to control the electronic device 100 only when a specific category application is executed.

For example, when a first gesture (an existing gesture) is changed to a second gesture (a changed gesture), the change application scope may indicate a setting scope of the second gesture. For example, the user may select a game category as a change application scope so that a first gesture set system-wide is changed to be set as a second gesture within an OTT category. For example, the electronic device 100 may perform an action corresponding to the changed second gesture when the game category is executed, and perform an action corresponding to the existing first gesture when operations other than the game category are executed.

In an embodiment, the electronic device 100 may receive a user input regarding whether a change to a gesture is to be set for the entire system of the electronic device 100, set for a specific category application installed on the electronic device 100, or set for a specific application installed on the electronic device 100. For example, the electronic device 100 may receive a user input for selecting any one of a system application item 911, a category application item 912, and an individual app application item 913 displayed on a first gesture modification screen 900 of FIG. 9.

In addition, according to an embodiment, the electronic device 100 may receive a user input regarding a change application duration of a gesture. In the present disclosure, a change application duration of a gesture may refer to a duration for which a change to the gesture is to persist. The electronic device 100 may receive a user input regarding whether the duration for which the change to the gesture persists is permanent or temporary. For example, the electronic device 100 may receive a user input for selecting either a permanent duration item 921 or a temporary duration item 922 displayed on the first gesture modification screen 900 of FIG. 9.

Furthermore, according to an embodiment, the electronic device 100 may receive a user input regarding a change application account for a gesture. In the present disclosure, a change application account for a gesture may refer to a setting account to which a change to the gesture is to be applied. The electronic device 100 may receive a user input regarding whether a change to the gesture is to be applied to all user accounts or an individual user account. For example, the electronic device 100 may receive a user input for selecting any one of an all user accounts item 931 and an individual user account item 932 displayed on the first gesture modification screen 900 of FIG. 9.

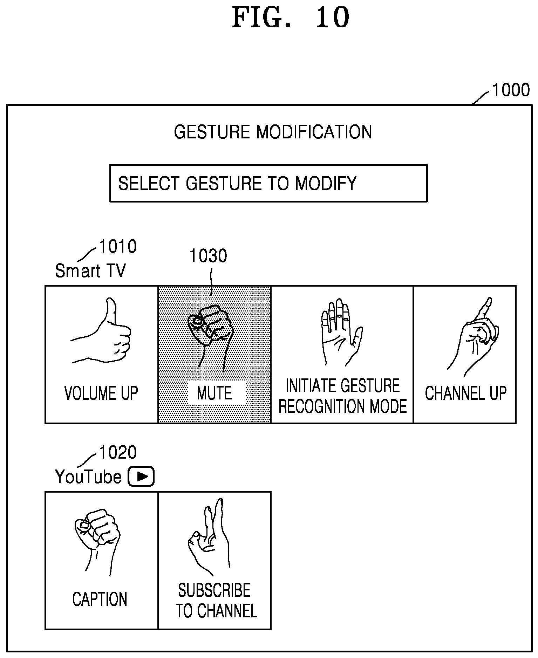

According to an embodiment, based on the change application scope being obtained, the electronic device 100 may control the display to output one or more gestures corresponding to the change application scope. For example, the electronic device 100 may display a UI representing one or more gestures set within the same setting scope as the change application scope. For example, the electronic device 100 may control the display to display one or more gestures set for at least one of the entire system of the electronic device 100, a category application, or an application. The UI representing one or more gestures set within the same setting scope as the change application scope selected by the user may be referred to as a 'second gesture modification screen'. A detailed description of the second gesture modification screen is provided with reference to FIG. 10 to be described below.

According to an embodiment, the electronic device 100 may receive a user input regarding a gesture to be changed. The gesture to be changed may be a gesture that the user wishes to change. For example, the electronic device 100 may receive a user input for selecting a gesture to be changed from among one or more gestures set within the same setting scope as the change application scope.

According to an embodiment, based on the user input for selecting the gesture to be changed, the electronic device 100 may identify information on an action corresponding to the gesture to be changed. For example, the electronic device 100 may identify information on a gesture stored in the gesture DB (340 of FIG. 3) and information on an action activatable by the gesture.

For example, on the second gesture modification screen 1000 of FIG. 10, the electronic device 100 may display a gesture list 1010 set system-wide. The user may select a 'Fist' gesture 1030 in order to modify the 'Fist' gesture 1030 included in the gesture list 1010. The gesture list 1010 may include one or more gestures set system-wide. The electronic device 100 may receive a user input for selecting the 'Fist' gesture 1030. Based on the user input, the electronic device 100 may identify information on the 'Fist' gesture 1030 and a 'Mute' action, which is information on an action corresponding thereto.

In operation 530, based on the information on the gesture and information on an action corresponding to the gesture, the electronic device 100 may obtain information on a plurality of candidate gestures corresponding to gestures set by other users for activating the action. The plurality of candidate gestures may include gestures set by other users for activating the action. The plurality of candidate gestures may indicate history information of gestures set by other users for the action. Alternatively, one or more candidate gestures may include gestures that other users have set with a high frequency for the action.

According to an embodiment, the electronic device 100 may identify the information on the gesture to be changed and the information on the action corresponding to the gesture, and obtain one or more candidate gestures for the action. For example, the electronic device 100 may store, in the candidate gesture list (420 of FIG. 4), one or more candidate gestures set by other users for the action. The electronic device 100 may identify one or more candidate gestures for an action, which are stored in the candidate gesture list 420. For example, in FIG. 10, based on the 'Fist' gesture 1030 and the 'Mute' action, the electronic device 100 may obtain one or more candidate gestures for the 'Mute' action.

In operation 540, based on the information on the plurality of candidate gestures and the change application scope, the electronic device 100 may provide recommended gestures corresponding to the action.

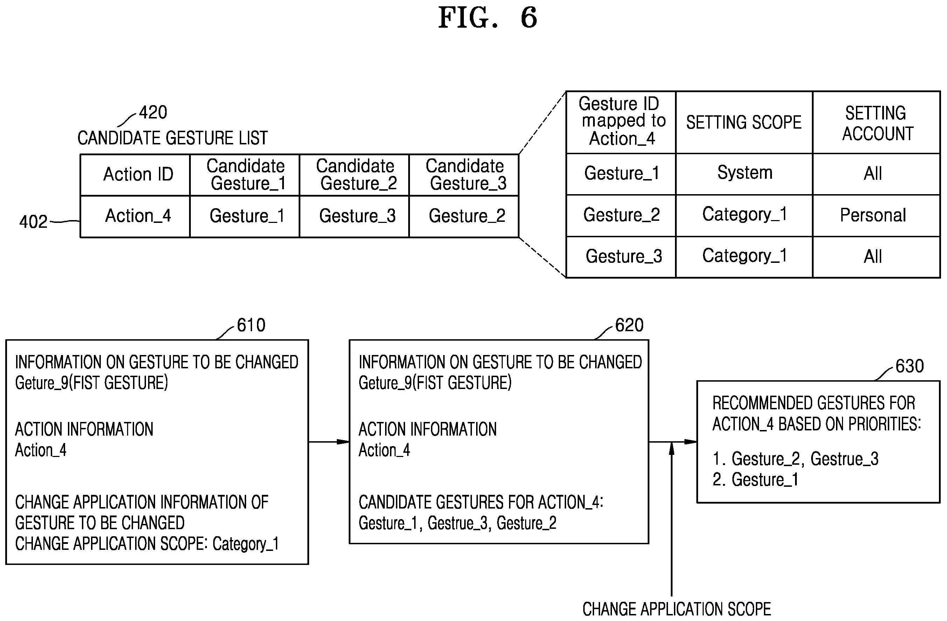

According to an embodiment, the electronic device 100 may prioritize candidate gestures having a setting scope identical to the change application scope from among the plurality of candidate gestures. The electronic device 100 may provide one or more candidate gestures as recommended gestures based on priorities thereof. For example, when the received change application scope is the entire system of the electronic device 100, the electronic device 100 may provide a first candidate gesture set system-wide among the plurality of candidate gestures as a recommended gesture for the action. For example, when the received change application scope is a specific category application, the electronic device 100 may provide a second candidate gesture, set for the specific category application among the plurality of candidate gestures, as a recommended gesture for the action. For example, when the received change application scope is a specific application, the electronic device 100 may provide a third candidate gesture, set for the specific application among the plurality of candidate gestures, as a recommended gesture for the action. This is described in detail with reference to FIG. 6.

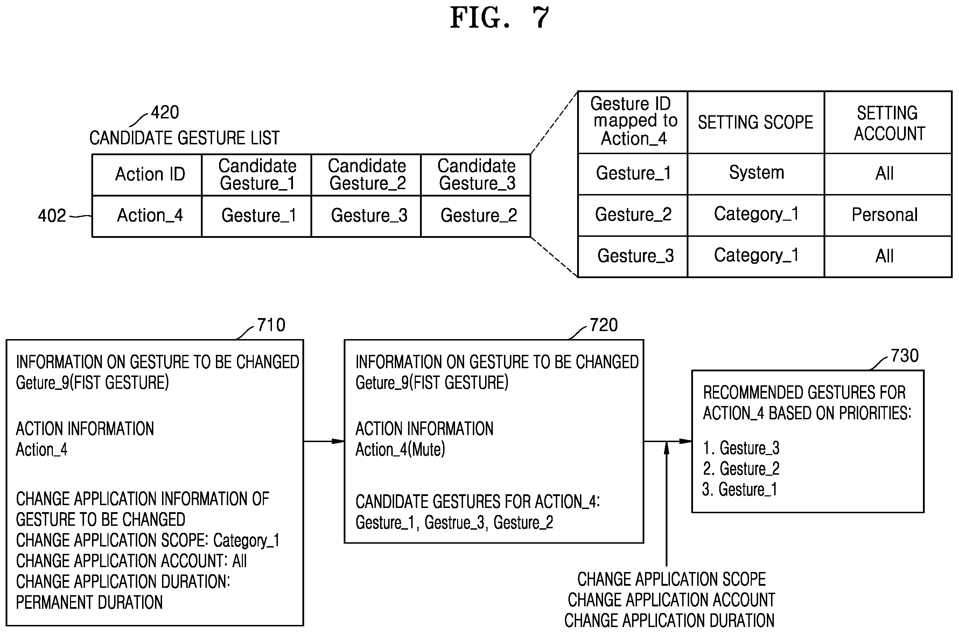

In addition, according to an embodiment, the electronic device 100 may provide a recommended gesture for the action by further considering at least one of a change application duration or a change application account for the one or more candidate gestures. The electronic device 100 may assign a first priority to a first candidate gesture having a setting scope identical to the change application scope of the gesture, and assign a second priority to a candidate gesture set corresponding to a change application duration or a change application account. The electronic device 100 may provide one or more candidate gestures as recommended gestures based on the priorities. For example, when two or more candidate gestures have a setting scope identical to the received change application scope, the electronic device 100 may assign a next priority based on a change application duration or a change application account. For example, the electronic device 100 may prioritize, from among the plurality of candidate gestures, a candidate gesture set for a setting account identical to the change application account. For example, the electronic device 100 may prioritize, from among the plurality of candidate gestures, a candidate gesture set to a duration identical to the change application duration. This is described in detail with reference to FIG. 7.

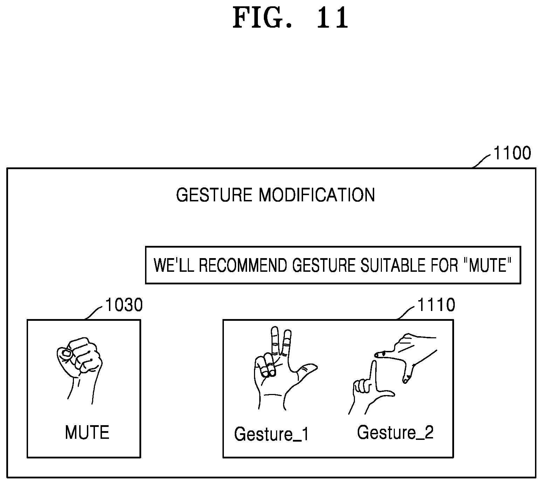

According to an embodiment, the electronic device 100 may display a UI indicating recommended gestures. The electronic device 100 may receive a user input for selecting a gesture to be applied after change via the UI indicating the recommended gestures. The UI indicating the recommended gestures may be referred to as a 'third gesture modification screen'. The third gesture modification screen is described in detail with reference to FIG. 11.

According to an embodiment, the electronic device 100 may change a gesture to be changed to another gesture based on a user input for selecting one of the recommended gestures. For example, the electronic device 100 may change a first gesture (an existing gesture or a gesture to be changed) mapped to a specific action to a second gesture (a changed gesture). Based on recognizing the second gesture, the electronic device 100 may activate a specific action previously activated in response to the first gesture. Based on a user input regarding a change application scope, the electronic device 100 may set the changed gesture (the second gesture) to be reflected only within that scope. The electronic device 100 may set the existing gesture (the first gesture) to be maintained outside that scope, rather than the changed gesture (the second gesture). The electronic device 100 may store the change application scope as a setting scope of the second gesture.

For example, the electronic device 100 may change the first gesture set for the system to the second gesture within an OTT category application. The electronic device 100 may recognize the first gesture in all environments other than the OTT category application. For example, the electronic device 100 may change the first gesture set for a game category to the second gesture within the OTT category application. The electronic device 100 may recognize the first gesture in the game category, or may fail to recognize the first gesture in the game category. For example, the electronic device 100 may change the first gesture set for the game category to the second gesture system-wide. The electronic device 100 may recognize only the second gesture system-wide, and may fail to recognize the first gesture.

According to an embodiment, based on a user input regarding a change application account, the electronic device 100 may set the changed gesture (the second gesture) to be applied only to the corresponding setting account. The electronic device 100 may set the existing gesture (the first gesture) to be maintained for accounts other than the corresponding setting account, instead of applying the changed gesture (the second gesture). The electronic device 100 may set the changed gesture to be reflected only in a first user account, while setting the existing gesture to be maintained for user accounts other than the first user account. The electronic device 100 may store the change application scope as a setting account for the second gesture. The electronic device 100 may store a change application duration as a duration of the second gesture.

FIG. 6 is a diagram illustrating an example of an operation in which an electronic device provides recommended gestures for a gesture to be changed, according to an embodiment.

In operation 610, the electronic device 100 may obtain information on a gesture to be changed, information on an action corresponding to the gesture, and a change application scope of the gesture.

For example, through operation 520 of FIG. 5, the electronic device 100 may receive a user input regarding a change application scope of the gesture. The electronic device 100 may receive a user input for selecting one of whether a change to the gesture is applied to an entire system, whether the change is applied to a specific category application, and whether the change is applied to a specific application. For example, the electronic device 100 may obtain a change application scope in which a change to a gesture is to be reflected, via the first gesture modification screen 900 of FIG. 9. For example, it is illustrated that the electronic device 100 receives a user input for setting a modification to the gesture for Category_1 (a first category application).

For example, through operation 530 of FIG. 5, the electronic device 100 may obtain information on the gesture to be changed and information on the action corresponding to the gesture. The electronic device 100 may receive a user input for selecting one of the gestures set within the same setting scope as the change application scope. For example, the electronic device 100 may obtain information on a gesture to be changed through the second gesture modification screen 1000 of FIG. 10. For example, the electronic device 100 may obtain Gesture_9 (fist gesture) as the information on the gesture to be changed. For example, the electronic device 100 may identify that Gesture_9 (fist gesture) is mapped to Action_4 in 301 of the gesture DB 340.

In operation 620, based on the information on the gesture to be changed and the information on the action corresponding to the gesture, the electronic device 100 may obtain one or more candidate gestures for the action.

For example, the electronic device 100 may obtain one or more candidate gestures for the action through operation 530 of FIG. 5. For example, the electronic device 100 may identify Gesture_1, Gesture_3, and Gesture_2 as candidate gestures for Action_4, in a row 402 of the candidate gesture list 420. Gesture_1, which is the first candidate gesture 422 for Action_4, has a history of being set system-wide as well as a history of being set for all users. Gesture_3, which is the second candidate gesture 423 for Action_4, has a history of being set for Category_1 as well as a history of being set for an individual user. Gesture_2, which is the third candidate gesture 424 for Action_4, has a history of being set for Category_1 as well as a history of being set for all users. For example, Category_1 may correspond to a game category application, but is not limited thereto.

In operation 630, the electronic device 100 may prioritize the candidate gestures set within the same setting scope as the change application scope of the gesture. The electronic device 100 may provide a recommended gesture for the action based on priorities thereof. Through operation 540 of FIG. 5, the electronic device 100 may provide recommended gestures for the action.

For example, the electronic device 100 may identify the setting scopes of Gesture_1, Gesture_3, and Gesture_2, and prioritize Gesture_2 and Gesture_3, which have a setting scope identical to the change application scope for Gesture_9 (fist gesture). For example, the change application scope in which a change to Gesture_9 (fist gesture) is to be reflected is Category_1, and the setting scopes of Gesture_2 and Gesture_3 are Category_1, so the setting scopes thereof may be identical.

For example, the electronic device 100 may use the candidate gestures for Action_4 to identify which gestures users frequently set for Action_4. Furthermore, the electronic device 100 may identify gestures that users frequently set for Action_4 within the same setting scope, and recommend an appropriate gesture for Action_4. For example, the electronic device 100 may identify that Gesture_2 or Gesture_3 is mainly set for Action_4 in a game category. The electronic device 100 may prioritize Gesture_2 or Gesture_3, which are candidate gestures set for Action_4 within the game category. The electronic device 100 may assign a next priority to Gesture_1, which is a candidate gesture having a different setting scope, or may not assign a priority to Gesture_1.

For example, the electronic device 100 may provide a candidate gesture, set within the same setting scope as the received change application scope, as a recommended gesture for the action. For example, the electronic device 100 may first provide Gesture_2 and Gesture_3, which users have a history of setting for Action_4 in the game category, as recommended gestures for Action_4. For example, the electronic device 100 may provide only Gesture_2 and Gesture_3 as recommended gestures, or provide Gesture_2 and Gesture_3 followed by Gesture_1 in that order as recommended gestures.

FIG. 7 is a diagram illustrating an example of an operation in which an electronic device provides recommended gestures for a gesture to be changed, according to an embodiment. According to an embodiment, the electronic device 100 may further obtain, in addition to a change application scope for a gesture to be changed, a change application duration and a change application account. In FIG. 7, descriptions already provided with respect to FIG. 6 are omitted.

In operation 710, the electronic device 100 may obtain information on a gesture to be changed, information on an action corresponding to the gesture, and change application information. The change application information may include a change application scope, a change application duration, and a change application account.

For example, it is illustrated that the electronic device 100 receives a user input in which the change application scope is Category_1 (the first category application), the change application account is All (all user accounts), and the change application duration is permanent. For example, the electronic device 100 may obtain Gesture_9 (fist gesture) as the information on the gesture to be changed. The electronic device 100 may identify that Gesture_9 (fist gesture) is mapped to Action_4 in 301 of the gesture DB 340.

In operation 720, based on the information on the gesture to be changed and the information on the action corresponding to the gesture, the electronic device 100 may obtain one or more candidate gestures for the action. The electronic device 100 may identify Gesture_1, Gesture_3, and Gesture_2 as candidate gestures for Action_4 in the row 402 of the candidate gesture list 420.

In operation 730, the electronic device 100 may assign a first priority to a candidate gesture set corresponding to the change application scope of the gesture, and assign a second priority to a candidate gesture set corresponding to either the change application account or the change application duration. The electronic device 100 may provide a recommended gesture for the action based on priorities thereof.

For example, the electronic device 100 may identify the setting scopes of Gesture_1, Gesture_3, and Gesture_2, and prioritize Gesture_2 and Gesture_3, which have a setting scope identical to the change application scope for Gesture_9 (fist gesture). For example, because the change application scope of Gesture_9 (fist gesture) is Category_1, and the setting scopes of Gesture_2 and Gesture_3 are Category_1, the setting scopes thereof may be identical.

For example, the electronic device 100 may assign a next priority based on the change application account or change application duration. For example, the electronic device 100 may assign the next priority to Gesture_3 having a setting account identical to the change application account for Gesture_9 (fist gesture). For example, the change application account for Gesture_9 (fist gesture) is All (all user accounts), and the setting account for Gesture_3 is All, so the setting accounts may be identical.

For example, the electronic device 100 may also assign the same priority to a candidate gesture that has a duration identical to the change application duration for Gesture_9 (fist gesture).

Alternatively, according to an embodiment, the electronic device 100 may assign a second priority to a candidate gesture set for the same setting account as the change application account of the gesture, and assign a third priority to a candidate gesture set to the same duration as the change application duration of the gesture. Alternatively, according to an embodiment, the electronic device 100 may assign a second priority to a candidate gesture set to the same duration as the change application duration of the gesture, and assign a third priority to a candidate gesture set for the same setting account as the change application account of the gesture.

For example, the electronic device 100 may provide Gesture_3, which users have a history of setting for Action_4 in the game category and for all user accounts, as a recommended gesture for Action_4. The electronic device 100 may provide Gesture_3, Gesture_2, and Gesture_1 as recommended gestures in that order. Alternatively, the electronic device 100 may provide only Gesture_3 as a recommended gesture.

FIG. 8 illustrates an example of a UI displaying a gesture settings screen, according to an embodiment.

FIG. 8 illustrates an example of a gesture settings screen 800 that an electronic device 100 may display when the electronic device 100 receives a user input for selecting the settings item 15. The gesture settings screen 800 may include a gesture recognition item 810 indicating whether a gesture recognition mode is running, a gesture addition item 820 for adding a gesture, a gesture modification item 830 for modifying a gesture, a gesture deletion item 840 for deleting a gesture, and the like. For example, the electronic device 100 may differently output the gesture recognition item 810 displayed when the gesture recognition mode is currently running and the gesture recognition item 810 displayed when it is not running.

The electronic device 100 may display a gesture modification screen based on a user input for selecting the gesture modification item 830.

FIG. 9 illustrates an example of a UI for inquiring about change application information regarding a gesture to be changed, according to an embodiment.

Referring to FIG. 9, the first gesture modification screen 900 illustrates an example of a UI that the electronic device 100 may display when receiving a user input for selecting the gesture modification item 830 shown in FIG. 8. The first gesture modification screen 900 may enable the user to inquire about change application information of a gesture to be changed. For example, the change application information of the gesture to be changed may include a change application scope 910 of the gesture, a change application duration 920 of the gesture, and a change application account 930 of the gesture.

The change application scope 910 of the gesture indicates a scope within which a change to the gesture is to be reflected. The change application scope 910 of the gesture may include the system application item 911, the category application item 912, and the individual app application item 913. The system application item 911 represents an item that allows a change to the gesture to be applied to the entire system. The category application item 912 represents an item that allows the change to the gesture to be applied to an individual category application. A submenu of the category application item 912 may include a game category, an OTT category, a music category, and the like. The individual app application item 913 represents an item that enables the change to the gesture to be applied to an individual app. A submenu of the individual app application item 912 may include a game app, an OTT app, a music app, and the like.

The change application duration 920 of the gesture indicates a duration for which the change to the gesture is to persist. The change application duration 920 of the gesture may include the permanent duration (Permanent) item 921 and the temporary duration (Temporary) item 922. The permanent duration item 921 represents an item that allows a modification to the gesture to persist permanently. The temporary duration item 922 represents an item that allows the modification to the gesture to persist temporarily. A submenu of the temporary duration item 922 may include an item for inquiring about a particular duration.

The change application account 930 of the gesture indicates a user account in which a change to the gesture is to be reflected. The change application account 930 of the gesture may include the all user accounts item 931 and the individual user account item 932. The all user accounts item 931 represents an item that allows the change to the gesture to be applied to all user accounts. The individual user account item 932 represents an item that allows the change to the gesture to be applied to an individual user account. The individual user account item 932 may include one or more user accounts currently registered on the electronic device 100, such as User 1 and User 2. For example, a user account to which the electronic device 100 is currently connected may be displayed as a current user account item 950. For example, the current user account item 950 may indicate that the user account currently connected to the electronic device 100 is 'User 1'.

FIG. 10 illustrates an example of a UI for inquiring about a gesture to be changed, according to an embodiment.

Referring to FIG. 10, the second gesture modification screen 1000 illustrates an example of a UI that the electronic device 100 may display when receiving a user input for selecting a first app from a submenu of the individual app application item 913 illustrated in FIG. 9.

The second gesture modification screen 1000 displays one or more gestures set on the electronic device 100. The electronic device 100 may display, on the second gesture modification screen 1000, a list 1010 of gestures set system-wide for the entire system of the electronic device 100 and a list of gestures 1020 set for a first app. However, the present disclosure is not limited thereto, and the electronic device 100 may also display only the list 1020 of gestures set for the first app on the second gesture modification screen 1000.

The electronic device 100 may display, in the gesture list 1010 set system-wide, a 'Volume Up' action and a 'Thumb Up' gesture related thereto, a 'Mute' action and the 'Fist' gesture 1030 related thereto, an 'Initiate Gesture Recognition Mode' action and a 'Palm Open' gesture related thereto, or a 'Channel Up' action and an 'One-finger Up' gesture related thereto.

The electronic device 100 may display, in the list 1020 of gestures set for the first app, a 'Set Captions' action and a 'Fist' gesture related thereto, or a 'Subscribe to Channel' action and a 'Victory' gesture related thereto.

The electronic device 100 may display, on the second gesture modification screen 1000, a UI such as "Please select a gesture to modify".

Moreover, although not shown, based on a user input for selecting the system application item 911, the electronic device 100 may display the list 1010 of gestures set system-wide. Additionally, based on a user input for selecting a first category application from a submenu of the category application item 912, the electronic device 100 may display the list 1010 of gestures set system-wide and a list of gestures set for the first category application.

FIG. 11 illustrates an example of a UI for providing recommended gestures for a gesture to be changed, according to an embodiment.

Referring to FIG. 11, a third gesture modification screen 1100 is illustrated as an example of a UI that the electronic device 100 may display when receiving a user input for selecting to modify the 'Fist' gesture 1030 shown in FIG. 10.

One or more recommended gestures 1110 are displayed on the third gesture modification screen 1100. The electronic device 100 may display, on the third gesture modification screen 1100, the one or more recommended gestures 1110 whose shapes are changed from the 'Fist' gesture 1030. The electronic device 100 may display the one or more recommended gestures 1110 based on a user input for changing a shape of the 'Fist' gesture 1030. Additionally, the electronic device 100 may display the one or more recommended gestures 1110 based on a user input for requesting a recommended gesture for a shape of the 'Fist' gesture 1030.

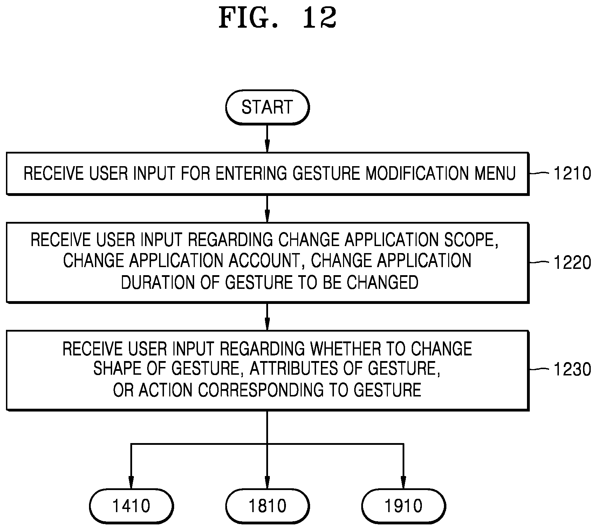

FIG. 12 is a flowchart of an operating method, performed by an electronic device, for performing a change in a shape of a gesture, a change in attributes of the gesture, or a change in an action, according to an embodiment.

Referring to FIG. 12, in operation 1210, the electronic device 100 may receive a user input for entering a gesture modification menu. Operation 1210 may correspond to operation 510 of FIG. 5.

In operation 1220, the electronic device 100 may receive a user input regarding a change application scope, a change application account, and a change application duration of a gesture to be changed. The electronic device 100 may display a UI for inquiring the user about change application information, such as the first gesture modification screen (900 of FIG. 9). For example, the change application information may include a change application scope, a change application account, and a change application duration. The electronic device 100 may receive, via a UI, a user input regarding the change application scope, the change application account, and the change application duration.

According to an embodiment, based on the change application scope being obtained, the electronic device 100 may control the display to output a list of gestures corresponding to the change application scope. The electronic device 100 may display a UI, such as the second gesture modification screen (1000 of FIG. 10), representing one or more gestures set within the same setting scope as the change application scope. For example, the electronic device 100 may control the display to display one or more gestures set for at least one of the entire system of the electronic device 100, a category application, or an application.

According to an embodiment, the electronic device 100 may receive a user input for selecting a gesture to be changed from among one or more gestures set within the same setting scope as the change application scope.

In operation 1230, the electronic device 100 may control the display to output a UI corresponding to a selection of at least one of a change in a shape of the gesture to be changed, a change in attributes of the gesture, and a change in an action corresponding to a specific gesture. The electronic device 100 may receive a user input for selecting at least one of a change in the shape of the gesture to be changed, a change in the attributes thereof, and a change in the action corresponding to the specific gesture.

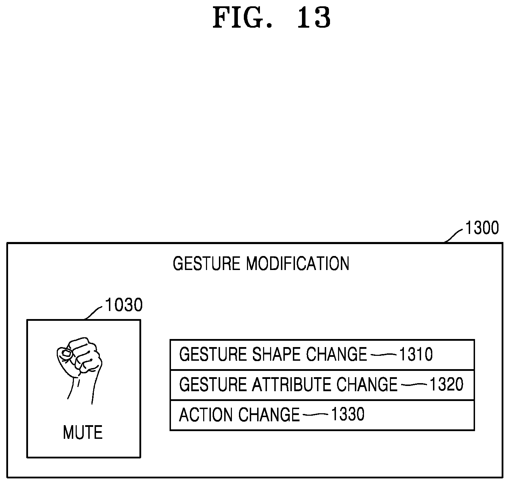

A UI corresponding to a selection of at least one of a change in a shape of a gesture to be changed, a change in attributes of the gesture, and a change in an action corresponding to a specific gesture may be referred to as a 'fourth gesture modification screen'. The fourth gesture modification screen is described in detail with reference to FIG. 13.

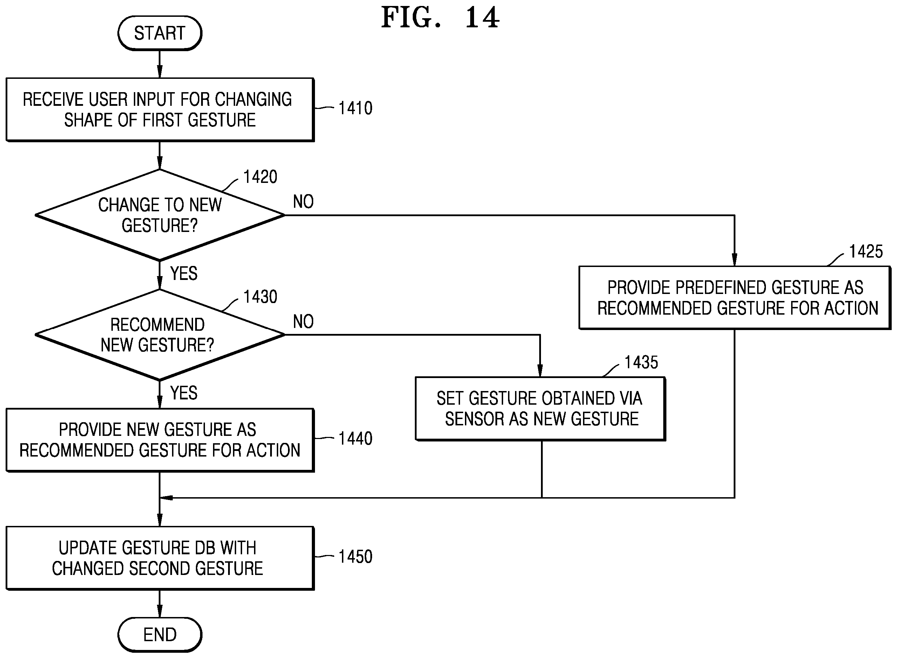

According to an embodiment, the electronic device 100 may perform operation 1410 of FIG. 14 based on a user input for changing the shape of the gesture.

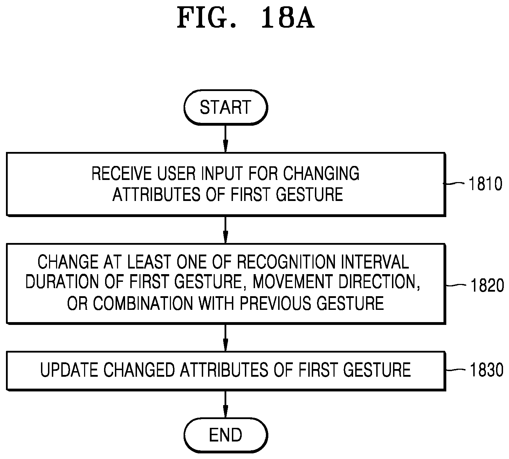

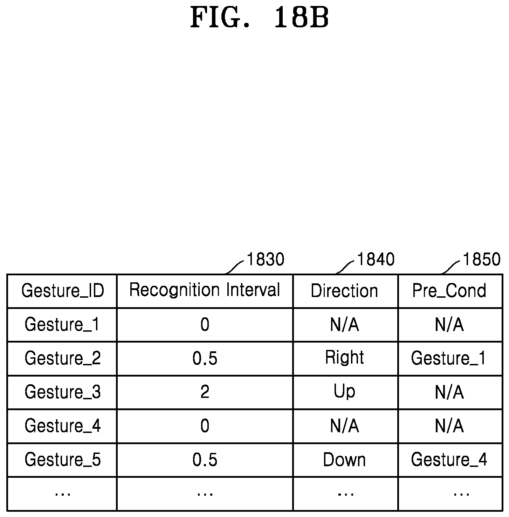

According to an embodiment, the electronic device 100 may perform operation 1810 of FIG. 18 based on a user input for changing the attributes of the gesture.

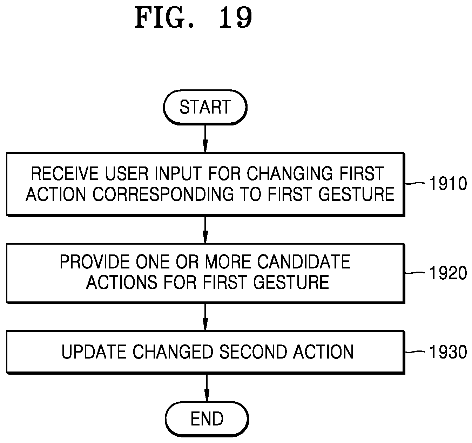

According to an embodiment, the electronic device 100 may perform operation 1910 of FIG. 19 based on a user input for changing the action.

FIG. 13 illustrates an example of a UI through which an electronic device inquires about a modification type of a gesture, according to an embodiment.

Referring to FIG. 13, a fourth gesture modification screen 1300 is illustrated as an example of a UI that the electronic device 100 may display when receiving a user input for selecting to modify the 'Fist' gesture 1030 shown in FIG. 10. The fourth gesture modification screen 1300 may inquire about a modification type of a gesture. For example, the fourth gesture modification screen 1300 may include a gesture shape change item 1310 for changing a gesture shape, a gesture attribute change item 1320 for changing gesture attributes, and an action change item 1330 for changing an action mapped to the gesture.

The gesture shape change item 1310 is an item for changing a shape of the gesture corresponding to the action. When the electronic device 100 receives a user input for selecting the gesture shape change item 1310, the electronic device 100 may display the third gesture modification screen 1100 including the one or more recommended gestures 1110 for the action, as shown in FIG. 11.

The gesture attribute change item 1320 is an item for changing attributes of the gesture.

The action change item 1330 is an item for changing the action for the gesture. When the electronic device 100 receives a user input for selecting the action change item 1330, the electronic device 100 may display one or more recommended actions for the gesture.

FIG. 14 is a flowchart of an operating method, performed by an electronic device, for changing a shape of a gesture, according to an embodiment.

Referring to FIG. 14, in operation 1410, the electronic device 100 may receive a user input for changing a shape of a first gesture. The first gesture may be a gesture to be changed. For example, the electronic device 100 may receive a user input for selecting the gesture shape change item 1310 displayed on the fourth gesture modification screen 1300 of FIG. 13.

In operation 1420, the electronic device 100 may receive a user input for changing the first gesture to a new gesture. For example, the new gesture may include a gesture not predefined in the electronic device 100. For example, the new gesture may be a concept opposite to a predefined gesture. For example, the predefined gesture may include a gesture predefined by a user on the electronic device 100.

According to an embodiment, the electronic device 100 may inquire the user about whether to change the first gesture to a new gesture or to an existing gesture. For example, the electronic device 100 may control the display to display a graphical UI (GUI) for inquiring about a selection of at least one of a change from the first gesture to a new gesture or a change from the first gesture to a predefined gesture.

According to an embodiment, the electronic device 100 may receive a user input for changing the first gesture to a new gesture. The electronic device 100 may perform operation 1430 based on the user input for changing the first gesture to the new gesture.

According to an embodiment, the electronic device 100 may receive a user input for changing the first gesture to a predefined gesture. The electronic device 100 may perform operation 1420 based on the user input for changing the first gesture to the predefined gesture.

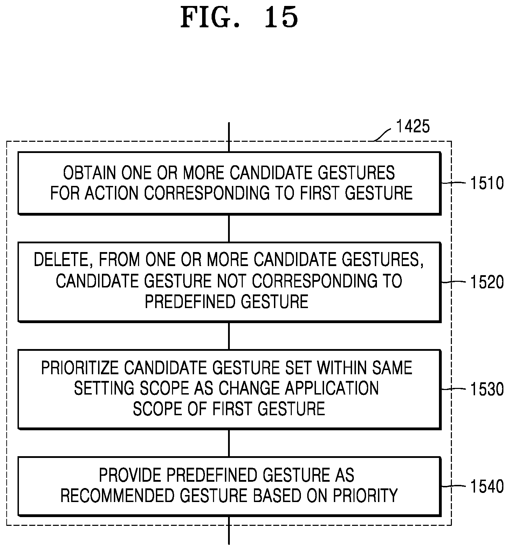

In operation 1425, based on the user input for changing the first gesture to the predefined gesture, the electronic device 100 may provide the predefined gesture as a recommended gesture for an action. This is described in detail with reference to FIG. 15.

FIG. 15 is a flowchart of an operating method, performed by an electronic device, for recommending an existing gesture, according to an embodiment.

Referring to FIG. 15, in operation 1510, the electronic device 100 may obtain one or more candidate gestures for an action corresponding to the first gesture. For example, the electronic device 100 may identify the first gesture and an action corresponding to the first gesture, and identify one or more candidate gestures for the action stored in the candidate gesture list 420.

In operation 1520, the electronic device 100 may delete, from among the one or more candidate gestures, a candidate gesture that does not correspond to a predefined gesture. For example, the electronic device 100 may delete, from among the one or more candidate gestures, a new gesture that is not defined in the electronic device 100. Alternatively, the electronic device 100 may exclude, from recommended gestures, a new gesture that is not defined in the electronic device 100 among the one or more candidate gestures.

In operation 1530, the electronic device 100 may prioritize a candidate gesture set within the same setting scope as a change application scope of the first gesture. For example, the electronic device 100 may identify, among the one or more candidate gestures, a candidate gesture having a setting scope identical to the change application scope of the first gesture. The electronic device 100 may prioritize the candidate gesture having the setting scope identical to the change application scope of the first gesture. The change application scope has been described in detail in operation 520 of FIG. 5.

In operation 1540, the electronic device 100 may provide the predefined gesture as a recommended gesture based on the priority. The electronic device 100 may provide, as a recommended gesture, a candidate gesture that does not correspond to a new gesture from among the one or more candidate gestures. The electronic device 100 may provide, as a recommended gesture, a candidate gesture having a setting scope identical to the change application scope of the first gesture from among candidate gestures that do not correspond to a new gesture. For example, the recommended gestures may consist only of predefined gestures. For example, the recommended gestures may not include a new gesture.

Moreover, according to an embodiment, the electronic device 100 may prioritize candidate gestures by considering either a change application account of the first gesture or a change application duration of the first gesture, in addition to the change application scope of the first gesture.

Referring back to FIG. 14, in operation 1430, based on the user input for changing the first gesture to the new gesture, the electronic device 100 may inquire whether the user desires a recommendation for the new gesture. The electronic device 100 may inquire whether the user desires a recommendation for the new gesture or whether the user wishes to directly register the new gesture. For example, the electronic device 100 may control the display to output a GUI for inquiring about a selection of at least one of a recommendation for the new gesture or registration of the new gesture.

According to an embodiment, the electronic device 100 may receive a user input for requesting a recommendation for the new gesture. Based on the user input for requesting the recommendation for the new gesture, the electronic device 100 may perform operation 1440.

According to an embodiment, the electronic device 100 may receive a user input for directly registering the new gesture. Based on the user input for directly registering the new gesture, the electronic device 100 may perform operation 1430.

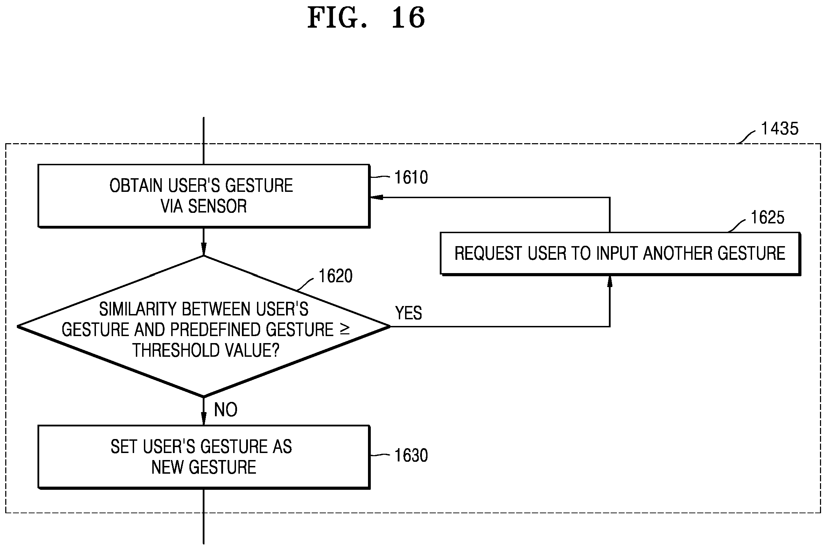

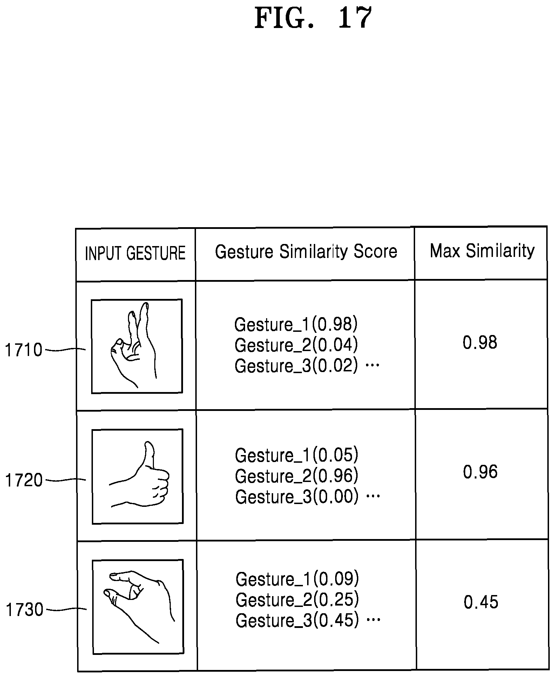

In operation 1435, based on the user input for directly registering the new gesture, the electronic device 100 may set, as the new gesture, a gesture obtained through the sensor 140. This is described in detail with reference to FIGS. 16 and 17.

FIG. 16 is a flowchart of an operating method, performed by an electronic device, for obtaining a new gesture from a user, according to an embodiment. FIG. 17 is a diagram illustrating results of an electronic device determining similarities of gestures, according to an embodiment.

Referring to FIG. 16, in operation 1610, the electronic device 100 may obtain a user's gesture via the sensor 140. For example, the electronic device 100 may extract feature information of the user's gesture obtained via the sensor 140. For example, the feature information of the user's gesture may be represented as embedded data.

In operation 1620, the electronic device 100 may determine a similarity between the user's gesture and a predefined gesture. The electronic device 100 may determine the similarity based on the feature information of the obtained user's gesture and feature information of the predefined gesture.

For example, the similarity may be calculated using the cosine similarity of Equation 1. However, a method of calculating the similarity is not limited to Equation 1.

[Equation 1]

$$\text{cosine similarity} = S_C(A, B) := \cos(\theta) = \frac{\mathbf{A} \cdot \mathbf{B}}{\|\mathbf{A}\| \|\mathbf{B}\|} = \frac{\sum_{i=1}^{n} A_i B_i}{\sqrt{\sum_{i=1}^{n} A_i^2} \sqrt{\sum_{i=1}^{n} B_i^2}}$$

In Equation 1, A may be embedding data representing feature information regarding a user's gesture, and B may be embedding data representing feature information regarding a predefined gesture.

When the similarity between the user's gesture and the predefined gesture is greater than or equal to a threshold value, the electronic device 100 may perform operation 1625. When the similarity between the user's gesture and the predefined gesture is less than the threshold value, the electronic device 100 may perform operation 1630.

In operation 1625, based on the similarity between the user's gesture and the predefined gesture being greater than or equal to the threshold value, the electronic device 100 may control the display to output a UI corresponding to a request for input of another gesture. For example, referring to FIG. 17, the electronic device 100 may identify a similarity between a first user's gesture 1710 and each of predefined gestures, and identify that a maximum similarity is greater than or equal to the threshold value. In addition, the electronic device 100 may identify a similarity between a second user's gesture 1720 and each of the predefined gestures, and identify that a maximum similarity is greater than or equal to the threshold value. For example, the threshold value is exemplified as being 0.8, but is not limited thereto. The electronic device 100 may request the user to re-input another gesture instead of the first user's gesture 1710. In addition, the electronic device 100 may request the user to re-input another gesture instead of the second user's gesture 1720.

According to an embodiment, when the similarity between the user's gesture and the predefined gesture is high, the electronic device 100 may request the user to perform re-input because there is a possibility of the gesture being confused with or incorrectly recognized as the predefined gesture.

In operation 1630, based on the similarity between the user's gesture and the predefined gesture being less than the threshold value, the electronic device 100 may apply the obtained user's gesture as a gesture for an action. For example, referring to FIG. 17, the electronic device 100 may identify a similarity between a third user's gesture 1730 and each of predefined gestures, and identify that a maximum similarity is less than the threshold value. The electronic device 100 may then set the third user's gesture 1730 as a new gesture.

According to an embodiment, when determining the similarity, the electronic device 100 may take into account at least one of a change application scope, a change application duration, or a change application account for a gesture. For example, when a change application scope of a first gesture received from a user is identical to a setting scope of a predefined gesture, the electronic device 100 may identify a similarity therebetween as being higher. For example, when a change application duration for the first gesture received from the user is identical to or similar to a duration of the predefined gesture, the electronic device 100 may identify the similarity as being higher. For example, when a change application account for the first gesture received from the user is identical to a setting account of the predefined gesture, the electronic device 100 may identify the similarity as being higher.

In operation 1440, based on the user input for requesting the recommendation for the new gesture, the electronic device 100 may provide a recommended gesture for an action. The electronic device 100 may provide a recommended gesture for the action, based on one or more candidate gestures for the action corresponding to the first gesture and a change application scope of the first gesture. Operation 1440 may correspond to operation 540 of FIG. 5.

In operation 1450, the electronic device 100 may update the gesture DB 340 with a changed second gesture. The second gesture may be the changed gesture. The electronic device 100 may change the first gesture set for the action to the second gesture. The electronic device 100 may store, in the gesture DB 340, information on the second gesture obtained by changing the first gesture. For example, the electronic device 100 may store a change application scope input by the user for the second gesture as a setting scope of the second gesture. The electronic device 100 may store, as a setting account of the second gesture, a change application account input by the user for the second gesture. For example, the electronic device 100 may store, as a duration of the second gesture, a change application duration input by the user for the second gesture.

According to an embodiment, the electronic device 100 may perform an operation corresponding to the second gesture, based on the setting scope of the second gesture.

According to an embodiment, the electronic device 100 may perform an operation corresponding to the second gesture, based on the setting account of the second gesture. For example, the electronic device 100 may set the second gesture so that it is reflected only in an individual user account, such as User 1. In this case, the electronic device 100 may set the second gesture so that it is reflected only in User 1. The electronic device 100 may maintain the first gesture instead of the second gesture for the remaining user accounts other than User 1. Alternatively, for example, the electronic device 100 may set the second gesture so that it is reflected only in all user accounts.

According to an embodiment, the electronic device 100 may perform an operation corresponding to the second gesture, based on the duration of the second gesture. For example, the electronic device 100 may set the first gesture to be permanently changed to the second gesture. Alternatively, for example, the electronic device 100 may set the first gesture to be temporarily changed to the second gesture. In this case, after a certain period of time (arbitrarily set by the user) has elapsed, the electronic device 100 may change the second gesture back to the first gesture.

FIG. 18A is a flowchart of an operating method, performed by an electronic device, for changing attributes of a gesture, according to an embodiment. FIG. 18B is a diagram illustrating attributes of gestures stored in an electronic device, according to an embodiment.

Referring to FIG. 18A, in operation 1810, the electronic device 100 may receive a user input for changing attributes of a first gesture. The attributes of a gesture may include at least one of a recognition interval duration of the gesture, a movement direction of the gesture, or a combination with a previous gesture. Operation 1810 may be an example of the operation described in operation 1230 of FIG. 12. For example, operation 1810 may be performed when a user input for selecting the gesture attribute change item 1320 on the fourth gesture modification screen 1300 of FIG. 13.

In operation 1820, the electronic device 100 may change at least one of a recognition interval duration of the first gesture, a movement direction of the first gesture, or a combination with a previous gesture.

Referring to FIG. 18B, in an embodiment, the electronic device 100 may store information on attributes of each gesture, such as a recognition interval duration 1830 of the gesture, a movement direction 1840, or a combination with a previous gesture 1850. For example, the electronic device 100 may store information on the attributes of the gesture in the gesture DB 340.

For example, in the case of Gesture_1 (e.g., a palm-open gesture), the recognition interval duration 1830 is 0 seconds, the movement direction 1840 does not exist, and also the combination 1850 with a previous gesture does not exist. Upon recognizing the palm-open gesture, the electronic device 100 may perform a corresponding action.

For example, in the case of Gesture_2, (e.g., a gesture of moving an open palm to the right), the recognition interval duration 1830 is 0.5 seconds, the movement direction 1840 is the right direction, and Gesture_2 may be performed using Gesture_1. The electronic device 100 may recognize Gesture_2 when the open palm is maintained for 0.5 seconds, and perform a corresponding action when the open palm moves to the right.

For example, in the case of Gesture_4 (e.g., a thumb-up gesture), the electronic device 100 may perform a corresponding action upon recognizing the thumb-up gesture. In the case of Gesture_5 (e.g., a gesture of moving a thumb-up downward), the electronic device 100 may recognize Gesture_5 when the thumb-up is maintained for 0.5 seconds, and perform a corresponding action when the thumb-up moves downward.

In an embodiment, the electronic device 100 may change the recognition interval duration 1830 of the first gesture. For example, the electronic device 100 may change the recognition interval duration 1830 of Gesture_2 from 0.5 seconds to 2 seconds. For example, the electronic device 100 may change an attribute of Gesture_2 so that Gesture_2 is recognized when the open palm is maintained for 2 seconds.

In an embodiment, the electronic device 100 may change the movement direction 1840 of the first gesture. For example, the electronic device 100 may change the movement direction 1840 of Gesture_2 from the right to the left. For example, the electronic device 100 may perform a corresponding action when the open palm is maintained for 2 seconds and then moves to the left.

In an embodiment, the electronic device 100 may change the combination 1850 with a previous gesture of the first gesture. For example, the electronic device 100 may change a previous gesture of Gesture_2 to a gesture other than Gesture_1.

In operation 1830, the electronic device 100 may update information on the changed attributes of the first gesture. For example, the electronic device 100 may store the information on the changed attributes of the first gesture in the gesture DB 340.

FIG. 19 is a flowchart of an operating method, performed by an electronic device, for changing an action, according to an embodiment.

Referring to FIG. 19, in operation 1910, the electronic device 100 may receive a user input for changing a first action corresponding to a first gesture. Operation 1910 may be an example of the operation described in operation 1230 of FIG. 12. For example, operation 1910 may be performed when a user input for selecting the action change item 1330 on the fourth gesture modification screen 1300 of FIG. 13.

In operation 1920, the electronic device 100 may provide one or more candidate actions for the first gesture.

According to an embodiment, the electronic device 100 may obtain one or more candidate actions for the first gesture, based on information on the first gesture and information on the first action corresponding to the first gesture. For example, the electronic device 100 may store, in the candidate action list (410 of FIG. 4), one or more candidate actions set by other users for a gesture. The electronic device 100 may identify one or more candidate actions for the gesture, which are stored in the candidate action list 410. The one or more candidate actions may represent history information about actions set by other users for the gesture. In addition, the one or more candidate gestures may include one or more actions that other users have set with a high frequency for the gesture. In an embodiment, the electronic device 100 may provide one or more candidate actions as recommended actions.

According to an embodiment, the electronic device 100 may prioritize, among the one or more candidate actions, a candidate action set within a set scope corresponding to a change application scope of the action. The electronic device 100 may also provide one or more candidate actions as recommended actions based on the priority.

In operation 1930, according to an embodiment, the electronic device 100 may change the first action for the first gesture to a second action. The electronic device 100 may change the first action to the second action based on a user input for selecting one of the recommended actions (or the candidate actions). The electronic device 100 may update information on the changed second action. The electronic device 100 may store information on the changed second action in the gesture DB 340.

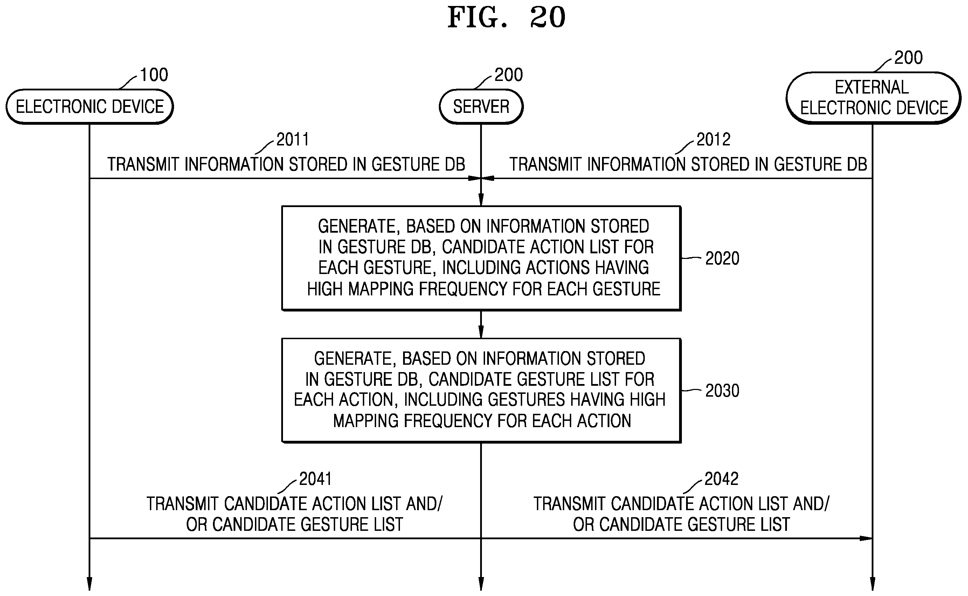

FIG. 20 is a flowchart illustrating operations of an electronic device and a server, according to an embodiment.

Referring to FIG. 20, an external electronic device 2000 may be an electronic device of another user, other than the electronic device 100. The external electronic device 2000 may be implemented as one or more electronic devices.

In operation 2011, the electronic device 100 may transmit information stored in the gesture DB 340 to the server 200. The gesture DB 340 may include information on gestures defined in the electronic device 100 by the user of the electronic device 100 and information on actions mapped to the gestures. The gesture DB 340 may include at least one of information on a setting scope of the gestures, information on a setting account for the gestures, and information on a duration of the gestures.

In operation 2012, the external electronic device 2000 may transmit information stored in the gesture DB to the server 200. The gesture DB includes information on gestures defined in the external electronic device 2000 by a user of the external electronic device 2000, information on actions mapped to the gestures, and may further include at least one of information on a setting scope of the gestures, information on a setting account for the gestures, and information on a duration of the gestures.

In operation 2020, based on the information stored in the gesture DBs, the server 200 may generate a candidate action list 410 for each gesture, including actions having a high mapping frequency for each gesture. The server 200 may update the candidate actions in descending order of mapping frequency, based on information on gestures and actions mapped to the gestures stored in the gesture DB 340 of the electronic device 100 and the gesture DB of the external electronic device 2000. The server 200 may generate the candidate action list 410 including one or more candidate actions for each gesture.

In operation 2030, based on the information stored in the gesture DBs, the server 200 may generate a candidate gesture list 420 for each action, including gestures having a high mapping frequency for each action. The server 200 may update the candidate gestures in descending order of mapping frequency, based on the information on the gestures and the actions mapped to the gestures stored in the gesture DB 340 of the electronic device 100 and the gesture DB of the external electronic device 2000. The server 200 may generate the candidate gesture list 420 for each action including one or more candidate gestures for each action. Furthermore, the candidate gesture list 420 may include at least one of information on a setting scope of the one or more candidate gestures, information on a setting account for the one or more candidate gestures, or information on a duration of the one or more candidate gestures.

In operation 2041, the server 200 may transmit a candidate action list 410 and/or the candidate gesture list 420 to the electronic device 100. The electronic device 100 may store in the memory 120 one or more candidate actions having a high mapping frequency for each gesture included in the candidate action list 410. The electronic device 100 may store in the memory 120 one or more candidate gestures having a high mapping frequency for each action included in the candidate gesture list 420. The electronic device 100 may store at least one of information on a setting scope of the one or more candidate gestures, information on a setting account for the one or more candidate gestures, or information on a duration of the one or more candidate gestures.

In operation 2042, the server 200 may transmit the candidate action list 410 and/or the candidate gesture list 420 to the external electronic device 2000. The external electronic device 2000 may store in memory one or more candidate actions having a high mapping frequency for each gesture. The external electronic device 2000 may store in memory one or more candidate gestures having a high mapping frequency for each action. The external electronic device 2000 may store at least one of information on a setting scope of the one or more candidate gestures, information on a setting account for the one or more candidate gestures, or information on a duration of the one or more candidate gestures.

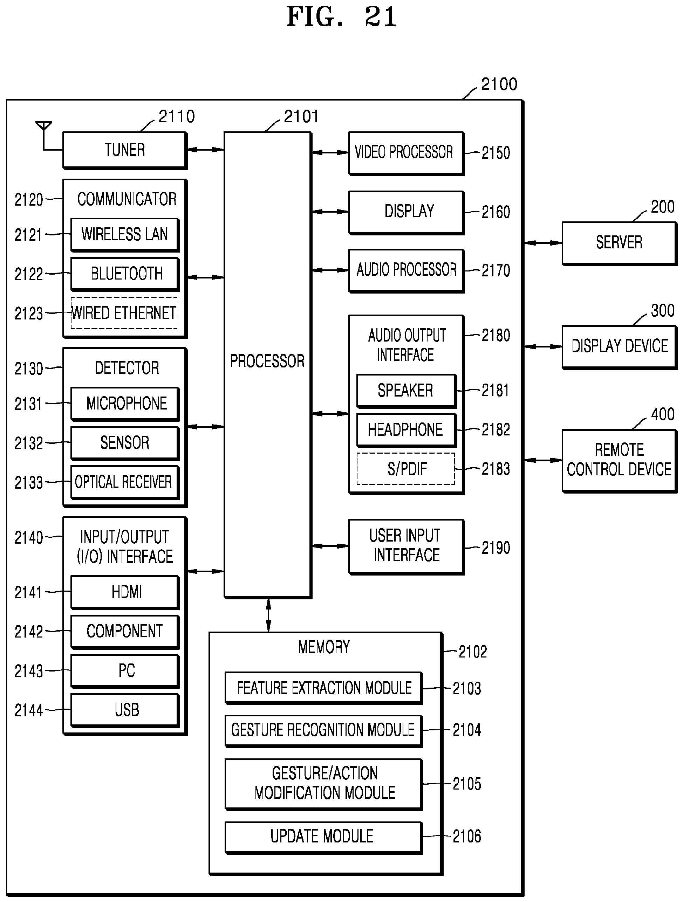

FIG. 21 is a detailed block diagram of an electronic device according to an embodiment.

An electronic device of FIG. 21 may be an example of the electronic device 100 of FIG. 2.

Referring to FIG. 21, the electronic device 2100 may include a processor 2101 and memory 2102. The processor 2101 and the memory 2102 included in the electronic device 2100 may respectively correspond to the processor 110 and the memory 120 included in the electronic device 100 of FIG. 2. Furthermore, a communicator 2120 included in the electronic device 2100 may correspond to the communicator 130 included in the electronic device 100 of FIG. 2, and a sensor 2132 included in the electronic device 2100 may correspond to the sensor 140 included in the electronic device 100 of FIG. 2. In addition, a user input interface 2190 included in the electronic device 2100 may be included in the UI 150 of the electronic device 100 of FIG. 2.

According to an embodiment, the electronic device 2100 may include, in addition to the processor 2101 and the memory 2102, a tuner 2110, the communicator 2120, a detector 2130, an I/O interface 2140, a video processor 2150, a display 2160, an audio processor 2170, an audio output interface 2180, and the user input interface 2190.

By performing amplification, mixing, resonance, etc. of broadcast content or the like received in a wired or wireless manner, the tuner 2110 may tune and then select only a frequency of a channel to be received by the electronic device 100 from among multiple radio wave components. Content received via the tuner 2110 is decoded and separated into audio, video, and/or additional information. The audio, video, and/or additional information may be stored in the memory 2102 according to control by the processor 2101.

The communicator 2120 may connect the electronic device 100 to a peripheral device, an external device, a server 200, a display device 300, a remote control device 400, a mobile terminal, etc. under the control of the processor 2101. The communicator 2120 may include at least one communication module capable of performing wireless communication. The communicator 2120 may include at least one of a WLAN module 2121, a Bluetooth module 2122, and a wired Ethernet 2123 corresponding to the performance and structure of the electronic device 2100.

The Bluetooth module 2122 may receive Bluetooth signals transmitted from a peripheral device according to the Bluetooth communication standard. The Bluetooth module 2122 may be a Bluetooth Low Energy (BLE) communication module and receive BLE signals. The Bluetooth module 2122 may continuously or temporarily scan for BLE signals to detect whether a BLE signal is being received. The WLAN module 2121 may transmit and receive Wi-Fi signals to and from peripheral devices according to the Wi-Fi communication standard.

In an embodiment, a communication module for communicating with the server 200, a communication module for communicating with the display device 300, a communication module for communicating with the remote control device 400, and a communication module for communicating with the mobile terminal may be different from one another or may be the same.

The detector 2130 detects a user's voice, images, or interactions and may include a microphone 2131, a camera 2132, and an optical receiver 2133.

The microphone 2131 may receive an audio signal including speech uttered by the user or noise, and convert the received audio signal into an electrical signal and output the electrical signal to the processor 2101.

The microphone 2131 may also be provided in the remote control device 400 such as a remote control, a mobile terminal, or an AI speaker. For example, the mobile terminal may execute an application for remotely controlling the electronic device 2100. In this case, the microphone 2131 provided in the remote control device 400 may receive an audio signal including the user's uttered speech or noise, and the remote control device 400 may convert the audio signal into a control signal and transmit the control signal to the electronic device 2100. The electronic device 2100 may receive the control signal from the remote control device 400 via the communicator 2130.

The sensor 2132 may detect the user's image, or the user's interaction, gesture, and touch, and include a distance sensor, an image sensor, a gesture sensor, an ambient light sensor, and the like. The distance sensor may include various types of sensors for detecting a distance between the electronic device 2100 and the user, such as an ultrasound sensor, an IR sensor, and a ToF sensor. The distance sensor may detect a distance from the user and transmit sensing data to the processor 2101. The image sensor may capture an image of the user's gesture through a camera or the like, and transmit the captured image to the processor 2101. The gesture sensor may detect a movement speed or direction through an accelerometer or gyroscope. The ambient light sensor may detect an ambient light level.

The optical receiver 2133 may receive an optical signal (including a control signal). The optical receiver 2133 may receive an optical signal corresponding to a user input (e.g., touching, pressing, touch gesture, voice, or motion) from a control device such as a remote control or a mobile phone.

According to control by the processor 2101, the I/O interface 2140 may receive video (e.g., dynamic image signals or still image signals), audio (e.g., speech signals, music signals, etc.), and additional information from an external device, etc. The I/O interface 2140 may include ports for outputting video and audio together, or ports for outputting video and audio separately.

The I/O interface 2140 may include one of a High-Definition Multimedia Interface (HDMI) port 2141, a component jack 2142, a PC port 2143, and a Universal Serial Bus (USB) port 2144. The I/O interface 2140 may include a combination of the HDMI port 2141, the component jack 2142, the PC port 2143, and the USB port 2144. Additionally, the I/O interface 2140 may include one of a DisplayPort (DP), a Thunderbolt port, a Video Graphics Array (VGA) port, a Red, Green, Blue (RGB) port, a D-subminiature (D-SUB), and a Digital Visual Interface (DVI).

In an embodiment, when the electronic device 2100 corresponds to a content provision device such as a STB, the I/O interface 2140 may output video, audio, and additional information to the display device 300 according to control by the processor 2101.

The video processor 2150 may process image data to be displayed by the display 2160 and perform various image processing operations, such as decoding, rendering, scaling, noise filtering, frame rate conversion, resolution conversion, etc., on the image data.

The display 2160 may display, on a screen, content received from a broadcasting station, an external server, an external storage medium, or the like. The content may include, as a media signal, a video signal, an audio signal, a text signal, etc.

In an embodiment, the display 2160 may output a recommended gesture on a screen based on a user input for changing a shape of a gesture. The display 2160 may output a recommended action on the screen based on a user input for changing an action. The display 2160 may output a GUI for inquiring about a change application scope, a change application duration, and/or a change application account for the gesture. Based on the user input for changing the shape of the gesture, the processor 2101 may control the display 2160 to output the recommended gesture on the screen. Based on the user input for changing the action, the processor 2101 may control the display 2160 to output the recommended action on the screen. The processor 2101 may control the display 2160 to output the GUI for inquiring about the change application scope, the change application duration, and/or the change application account for the gesture.

In an embodiment, when the electronic device 2100 is connected to the display device 300, the processor 2101 may transmit information on a recommended gesture to the display device 300 based on a user input for changing a shape of a gesture.

The audio processor 2170 processes audio data. The audio processor 2170 may perform various types of processing, such as decoding, amplification, noise filtering, etc., on the audio data.

The audio output interface 2180 may output, according to control by the processor 101, audio contained in content received via the tuner 2110, audio input via the communicator 2120 or the I/O interface 2140, and audio stored in the memory 2102. The audio output interface 2180 may include at least one of a speaker 2181, a headphone 2182, or a Sony/Phillips Digital Interface (S/PDIF) output terminal 2183.

In an embodiment, the audio output interface 2180 may output, as audio, information on a target action predicted for a user's gesture. The processor 2101 may control the audio output interface 2180 to output, as audio, information on the target action predicted for the user's gesture.

The user input interface 2190 may receive a user input for controlling the electronic device 2100. The user input interface 2190 may include, but is not limited to, various types of input devices consisting of a touch panel for sensing a user's touch, a button for receiving a user's push manipulation, a wheel for receiving a user's rotation manipulation, a keyboard, a dome switch, a microphone for speech recognition, a motion detection sensor for sensing a motion, and the like. When a remote control or other mobile terminals, such as the remote control device 400, controls the electronic device 2100, the user input interface 2190 may receive a control signal received from the remote control device 400.

According to an embodiment, the memory 2102 may include a feature extraction module 2103, a gesture recognition module 2104, a gesture/action modification module 2105, and an update module 2106. Programs stored in the memory 1802 may be classified into a plurality of modules according to their functions. In detail, each of the feature extraction module 2103, the gesture recognition module 2104, the gesture/action modification module 2105, and the update module 2106 may include appropriate software, logic, circuitry, interfaces, and/or code operable to perform predetermined functions.

The feature extraction module 2103 may extract, based on a user's gesture obtained via the sensor 2132, feature information representing characteristics of the gesture. For example, the feature information may include embedding data. The feature information may differ or be similar for each gesture. For example, when the shapes of gestures are similar, the similarity between feature information of the gestures may be high. When the shapes of the gestures are dissimilar, the similarity between feature information of the gestures may be low. For example, the embedding data may be represented by 1,024 pieces of data, but is not limited thereto. The feature extraction module 2103 may extract the feature information representing the characteristics of the gesture by using a known algorithm or one or more neural networks based on AI. The feature extraction module 2103 may provide the feature information to the gesture recognition module 2104.

The gesture recognition module 2104 may obtain the feature information regarding a user's gesture, which is extracted by the feature extraction module 2103. The gesture recognition module 2104 may determine whether the user's gesture corresponds to a predefined gesture. For example, the gesture recognition module 2104 may determine whether the user's gesture corresponds to the predefined gesture by determining a similarity between the user's gesture and the predefined gesture. For example, the gesture recognition module 2104 may determine the similarity based on feature information of the user's gesture and feature information of the predefined gesture stored in the gesture DB 340. For example, based on a user input for changing a shape of a gesture to a new gesture, the gesture recognition module 2104 may determine whether a newly entered user gesture is similar to a predefined gesture.

Based on a user input, the gesture/action modification module 2105 may change a shape of a predefined gesture, change an attribute of the predefined gesture, or change an action mapped to the predefined gesture.

When the shape of the gesture is changed, the update module 2106 may update the gesture DB 340 with the changed shape of the gesture. When the attribute of the gesture is changed, the update module 2106 may update the gesture DB 340 with the changed attribute of the gesture. When the action is changed, the update module 2106 may update the gesture DB 340 with the changed action.

According to an embodiment, one or more processors executes one or more instructions to receive a user input corresponding to information on a gesture to be changed and a change application scope of the gesture. Based on the information on the gesture and information on an action corresponding to the gesture, the one or more processors may obtain information on a plurality of candidate gestures corresponding to gestures set by other users for activating the action. Based on the information on the plurality of candidate gestures and the change application scope, the one or more processors provide a recommended gesture corresponding to the action.

According to an embodiment, the one or more processors may execute the one or more instructions to provide the recommended gesture by assigning a first priority to a candidate gesture having a setting scope identical to the change application scope from among the plurality of candidate gestures.

According to an embodiment, the one or more processors may execute the one or more instructions to obtain at least one of a change application duration for the gesture or a change application account for the gesture. The one or more processors may provide the recommended gesture by assigning a second priority to a candidate gesture corresponding to the change application duration or the change application account from among the plurality of candidate gestures.

According to an embodiment, the one or more processors may execute the one or more instructions to receive a user input for selecting one of whether a change to the gesture is applied to an entire system, whether the change is applied to a specific category application, and whether the change is applied to a specific application

According to an embodiment, the one or more processors may execute the one or more instructions to, based on the change application scope corresponding to an entire system, provide a first candidate gesture, which is applied to the entire system from among the plurality of first candidate gestures, as the recommended gesture for the action . Based on the change application scope corresponding to a specific category application, the one or more processors may provide a second candidate gesture, which is applied to the specific category application from among the plurality of candidate gestures, as the recommended gesture for the action. Based on the change application scope corresponding to a specific application, the one or more processors may provide a third candidate gesture, set for the specific application from among the plurality of candidate gestures, as the recommended gesture for the action.

According to an embodiment, the one or more processors may execute the one or more instructions to, based on the change application scope being obtained, control the display to output a gesture list corresponding to the change application scope. Based on a user input corresponding to a selection of a specific gesture from the output gesture list being received, the one or more processors may control the display to output a UI corresponding to a selection of at least one of a change in a shape of the specific gesture, a change in attributes of the specific gesture, or a change in an action corresponding to the specific gesture.

According to an embodiment, the one or more processors may execute the one or more instructions to, based on the user input corresponding to the change in the shape of the gesture being received, control the display to output a UI corresponding to a selection of at least one of a change from the gesture to a new gesture or a change from the gesture to a predefined gesture. Based on the user input corresponding to the change to the predefined gesture being received, the one or more processors may provide, as the recommended gesture for the action, a candidate gesture that does not correspond to the new gesture among the plurality of candidate gestures.

According to an embodiment, the one or more processors may execute the one or more instructions to obtain a user's gesture via the sensor 140 based on receiving a user input for registering a gesture corresponding to the action to change the shape of the gesture. Based on a similarity between the obtained user's gesture and the predefined gesture being greater than or equal to a threshold value, the one or more processors may control the display to output a UI corresponding to a request for input of another gesture. Based on the similarity between the obtained user's gesture and the predefined gesture being less than the threshold value, the one or more processors may apply the obtained gesture as a gesture for the action.

According to an embodiment, the one or more processors may control the communicator 120 to transmit, to an external device, at least one of the information on the gesture, the information on the action mapped to the gesture, information on a setting scope of the gesture, information on a setting account of the gesture, or information on a duration of the gesture.

According to an embodiment, the one or more processors may execute the one or more instructions to control the communicator 120 to receive, from an external device, at least one of information on the plurality of candidate gestures mapped to the action by a plurality of other users, information on a setting scope of the plurality of candidate gestures, information on a setting account of the plurality of candidate gestures, or information on a duration of the plurality of candidate gestures.

An operating method of an electronic device 100, according to an embodiment, may include receiving a user input corresponding to information on a gesture to be changed and a change application scope of the gesture (operation 520), obtaining, based on the information on the gesture and information on an action corresponding to the gesture, information on a plurality of candidate gestures corresponding to gestures set by other users for activating the action (operation 530), and providing a recommended gesture corresponding to the action, based on the information on the plurality of candidate gestures and the change application scope (operation 540).

The providing of the recommended gesture corresponding to the action, based on the information on the plurality of candidate gestures and the change application scope (operation 540), may include providing the recommended gesture by assigning a first priority to a candidate gesture having a setting scope identical to the change application scope from among the plurality of candidate gestures.

According to an embodiment, the operating method of the electronic device 100 may further include obtaining at least one of a change application duration for the gesture or a change application account for the gesture. The providing of the recommended gesture corresponding to the action, based on the information on the plurality of candidate gestures and the change application scope (operation 540), may include providing the recommended gesture by assigning a second priority to a candidate gesture corresponding to the change application duration or the change application account from among the plurality of candidate gestures.

According to an embodiment, the operating method of the electronic device 100 may further include receiving a user input for selecting one of whether a change to the gesture is applied to an entire system, whether the change is applied to a specific category application, and whether the change is applied to a specific application.

The providing of the recommended gesture corresponding to the action, based on the information on the plurality of candidate gestures and the change application scope (operation 540), may include providing, based on the change application scope corresponding to an entire system, a first candidate gesture applied to the entire system from among the plurality of first candidate gestures as the recommended gesture for the action, providing, based on the change application scope corresponding to a specific category application, a second candidate gesture applied to the specific category application from among the plurality of candidate gestures as the recommended gesture for the action, and providing, based on the change application scope corresponding to a specific application, a third candidate gesture set for the specific application from among the plurality of candidate gestures as the recommended gesture for the action.

According to an embodiment, the operating method of the electronic device 100 may further include, controlling, based on the change application scope being obtained, the display to output a gesture list corresponding to the change application scope, and controlling, based on a user input corresponding to a selection of a specific gesture from the output gesture list being received, the display to output a UI corresponding to a selection of at least one of a change in a shape of the specific gesture, a change in attributes of the specific gesture, or a change in an action corresponding to the specific gesture.

According to an embodiment, the operating method of the electronic device 100 may further include, controlling, based on the user input corresponding to the change in the shape of the gesture being received, the display to output a UI corresponding to a selection of at least one of a change from the gesture to a new gesture or a change from the gesture to a predefined gesture, and providing, based on the user input corresponding to the change to the predefined gesture being received, a candidate gesture that does not correspond to the new gesture among the plurality of candidate gestures, as the recommended gesture for the action.

According to an embodiment, the operating method of the electronic device 100 may further include, obtain a user's gesture via the sensor 140 based on receiving a user input for registering a gesture corresponding to the action to change the shape of the gesture, controlling, based on a similarity between the obtained user's gesture and the predefined gesture being greater than or equal to a threshold value, the display to output a UI corresponding to a request for input of another gesture, and applying, based on the similarity between the obtained user's gesture and the predefined gesture being less than the threshold value, the obtained gesture as a gesture for the action.

According to an embodiment, the operating method of the electronic device 100 may further include controlling the communicator 120 to transmit, to an external device, at least one of the information on the gesture, the information on the action mapped to the gesture, information on a setting scope of the gesture, information on a setting account of the gesture, or information on a duration of the gesture.

According to an embodiment, the operating method of the electronic device 100 may further include controlling the communicator 120 to receive, from an external device, at least one of information on the plurality of candidate gestures mapped to the action by a plurality of other users, information on a setting scope of the plurality of candidate gestures, information on a setting account of the plurality of candidate gestures, or information on a duration of the plurality of candidate gestures.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment, methods according to various embodiments disclosed herein may be included in a computer program product when provided. The computer program product may be traded, as a product, between a seller and a buyer. The computer program product may be distributed in the form of a machine-readable storage medium (e.g., compact disc read-only memory (CD-ROM)) or distributed (e.g., downloaded or uploaded) on-line via an application store or directly between two user devices (e.g., smartphones). For online distribution, at least a part of the computer program product (e.g., a downloadable app) may be at least transiently stored or temporarily generated in a machine-readable storage medium such as a memory of a server of a manufacturer, a server of an application store, or a relay server.

**Claims**

1. An electronic device (100) comprising:

   memory (120) storing one or more instructions; and
   one or more processors (110) configured to execute the one or more instructions stored in the memory (120),
   wherein the one or more processors (110) are configured to execute the one or more instructions to
   receive a user input corresponding to information on a gesture to be changed and a change application scope of the gesture,
   based on the information on the gesture and information on an action corresponding to the gesture, obtain information on a plurality of candidate gestures corresponding to gestures set by another user for activating the action, and
   based on the information on the plurality of candidate gestures and the change application scope, provide a recommended gesture corresponding to the action.

2. The electronic device of claim 1, wherein the one or more processors (110) are further configured to execute the one or more instructions to provide the recommended gesture by assigning a first priority to a candidate gesture having a setting scope identical to the change application scope from among the plurality of candidate gestures.

3. The electronic device of claim 2, wherein

   the one or more processors (110) are further configured to execute the one or more instructions to
   obtain at least one of a change application duration for the gesture or a change application account for the gesture, and
   provide the recommended gesture by assigning a second priority to a candidate gesture corresponding to the change application duration or the change application account from among the plurality of candidate gestures.

4. The electronic device (100) of any one of claims 1 to 3, wherein the one or more processors (110) are further configured to execute the one or more instructions to receive a user input for selecting one of whether a change to the gesture is applied to an entire system, whether the change is applied to a specific category application, and whether the change is applied to a specific application.

5. The electronic device (100) of any one of claims 1 to 4, wherein

   the one or more processors (110) are further configured to execute the one or more instructions to,
   based on the change application scope corresponding to an entire system, provide a first candidate gesture, which is applied to the entire system from among the plurality of first candidate gestures, as the recommended gesture for the action,
   based on the change application scope corresponding to a specific category application, provide a second candidate gesture, which is applied to the specific category application from among the plurality of candidate gestures, as the recommended gesture for the action, and
   based on the change application scope corresponding to a specific application, provide a third candidate gesture, set for the specific application from among the plurality of candidate gestures, as the recommended gesture for the action.

6. The electronic device (100) of any one of claims 1 to 5, further comprising

   a display,
   wherein the one or more processors (110) are further configured to execute the one or more instructions to,
   based on the change application scope being obtained, control the display to output a gesture list corresponding to the change application scope, and based on a user input corresponding to a selection of a specific gesture from the output gesture list being received, control the display to output a user interface (UI) corresponding to a selection of at least one of a change in a shape of the specific gesture, a change in attributes of the specific gesture, or a change in an action corresponding to the specific gesture.

7. The electronic device (100) of any one of claims 1 to 6, further comprising

a display,
wherein the one or more processors (110) are further configured to execute the one or more instructions to,
based on the user input corresponding to the change in the shape of the gesture being received, control the display to output a UI corresponding to a selection of at least one of a change from the gesture to a new gesture or a change from the gesture to a predefined gesture, and
when the user input corresponding to the change to the predefined gesture is received, provide, as the recommended gesture for the action, a candidate gesture that does not correspond to the new gesture among the plurality of candidate gestures.

8. The electronic device (100) of any one of claims 1 to 7, further comprising

a display,
wherein the one or more processors (110) are further configured to execute the one or more instructions to,
based on receiving a user input for registering a gesture corresponding to the action to change the shape of the gesture, obtain a user's gesture via a sensor,
based on a similarity between the obtained user's gesture and the predefined gesture being greater than or equal to a threshold value, control the display to output a UI corresponding to a request for input of another gesture, and
based on the similarity between the obtained user's gesture and the predefined gesture being less than the threshold value, apply the obtained gesture as a gesture for the action.

9. The electronic device (100) of any one of claims 1 to 8, further comprising

a communicator (130),
wherein the one or more processors (110) are further configured to execute the one or more instructions to control the communicator (130) to transmit, to an external device, at least one of the information on the gesture, the information on the action mapped to the gesture, information on a setting scope of the gesture, information on a setting account of the gesture, or information on a duration of the gesture.

10. The electronic device (100) of any one of claims 1 to 9, further comprising

a communicator (130),
wherein the one or more processors (110) are further configured to execute the one or more instructions to control the communicator (130) to receive, from an external device, at least one of information on the plurality of candidate gestures mapped to the action by a plurality of other users, information on a setting scope of the plurality of candidate gestures, information on a setting account of the plurality of candidate gestures, or information on a duration of the plurality of candidate gestures.

11. An operating method of an electronic device (100), the operating method comprising:

receiving a user input corresponding to information on a gesture to be changed and a change application scope of the gesture (520);
obtaining, based on the information on the gesture and information on an action corresponding to the gesture, information on a plurality of candidate gestures corresponding to gestures set by another user for activating the action (530); and
providing a recommended gesture corresponding to the action, based on the information on the plurality of candidate gestures and the change application scope (540).

12. The operating method of claim 11, wherein the providing of the recommended gesture corresponding to the action, based on the information on the plurality of candidate gestures and the change application scope (540), comprises providing the recommended gesture by assigning a first priority to a candidate gesture having a setting scope identical to the change application scope from among the plurality of candidate gestures.

13. The operating method of claim 12, further comprising obtaining at least one of a change application duration for the gesture or a change application account for the gesture,

wherein the providing of the recommended gesture corresponding to the action, based on the information on the plurality of candidate gestures and the change application scope (540), comprises
providing the recommended gesture by assigning a second priority to a candidate gesture corresponding to the change application duration or the change application account from among the plurality of candidate gestures.

14. The operating method of any one of claims 11 to 13, further comprising receiving a user input for selecting one of whether a change to the gesture is applied to an entire system, whether the change is applied to a specific category application, and whether the change is applied to a specific application.

15. The operating method of any one of claims 11 to 14, wherein
the providing of the recommended gesture corresponding to the action, based on the information on the plurality of candidate gestures and the change application scope (540), comprises:

based on the change application scope corresponding to an entire system, providing a first candidate gesture, which is applied to the entire system from among the plurality of first candidate gestures, as the recommended gesture for the action;
based on the change application scope corresponding to a specific category application, providing a second candidate gesture, which is applied to the specific category application from among the plurality of candidate gestures, as the recommended gesture for the action; and
based on the change application scope corresponding to a specific application, providing a third candidate gesture, set for the specific application from among the plurality of candidate gestures, as the recommended gesture for the action.

# FIG. 1

GESTURE: PALM-OPEN
SETTING SCOPE: ENTIRE SYSTEM
ACTION: INITIATE GESTURE RECOGNITION MODE

1 / 6
CHECK TIME

GESTURE: MOVE OPEN PALM LEFT AND RIGHT
SETTING SCOPE: GAME CATEGORY
ACTION: CONTROL OBJECT IN GAME

EP 4 772 969 A1

# FIG. 2

# FIG. 3

340
Gesture DB

| Gesture ID | Action ID | SETTING SCOPE | SETTING ACCOUNT | |
|---|---|---|---|---|
| Gesture_4 | Action_6 | App_23 | User_1 | |
| Gesture_8 | Action_2 | System | User_2 | |
| Gesture_21 | Action_7 | Category_1 | All | |
| Gesture_25 | Action_35 | System | All | |
| Gesture_9 | Action_4 | System | All | —301 |

341 342 343 344

350
Action DB

| Action ID | Target Action | |
|---|---|---|
| Action_1 | Launch Home | |
| Action_2 | Volume Up | |
| Action_3 | Launch Netflix | |
| Action_4 | Mute | —302 |
| Action_5 | Channel UP | |
| Action_6 | Control Object | |

351 352

# FIG. 4

CANDIDATE ACTION LIST

| Gesture ID | Embedding Data | Candidate Action_1 | SETTING SCOPE | SETTING ACCOUNT |
|---|---|---|---|---|
| Gesture_1 | 0.000 0.631 0.000 ⋯ | Action_3 | System | All |
| Gesture_2 | 0.328 0.406 0.000 ⋯ | Action_4 | System | All |
| Gesture_3 | 0.000 1.455 0.000 ⋯ | Action_8 | Category_1 | Personal |
| Gesture_4 | 0.685 0.000 0.000 ⋯ | Action_3 | System | Personal |
| Gesture_5 | 2.704 0.000 0.918 ⋯ | Action_2 | App_2 | All |

— 401

420

CANDIDATE GESTURE LIST

| Action ID | Candidate Gesture_1 | Candidate Gesture_2 | Candidate Gesture_3 |
|---|---|---|---|
| Action_1 | Gesture_3 | Gesture_1 | Gesture_5 |
| Action_2 | Gesture_4 | Gesture_2 | Gesture_1 |
| Action_3 | Gesture_8 | Gesture_9 | Gesture_6 |
| Action_4 | Gesture_1 | Gesture_3 | Gesture_2 |
| Action_5 | Gesture_2 | Gesture_6 | Gesture_7 |

402—

| Gesture ID mapped to Action_4 | SETTING SCOPE | SETTING ACCOUNT |
|---|---|---|
| Gesture_1 | System | All |
| Gesture_2 | Category_1 | Personal |
| Gesture_3 | Category_1 | All |

EP 4 772 969 A1

# FIG. 5

```
                         ( START )
                            │
                            ▼
┌─────────────────────────────────────────────────────────────┐
│ RECEIVE USER INPUT FOR ENTERING GESTURE MODIFICATION MENU    │──510
└─────────────────────────────────────────────────────────────┘
                            │
                            ▼
┌─────────────────────────────────────────────────────────────┐
│ RECEIVE INFORMATION ON GESTURE TO BE CHANGED AND USER        │──520
│ INPUT CORRESPONDING TO CHANGE APPLICATION SCOPE FOR GESTURE  │
└─────────────────────────────────────────────────────────────┘
                            │
                            ▼
┌─────────────────────────────────────────────────────────────┐
│ OBTAIN, BASED ON INFORMATION ON GESTURE AND INFORMATION ON   │
│ ACTION CORRESPONDING TO GESTURE, INFORMATION ON PLURALITY OF │──530
│ CANDIDATE GESTURES CORRESPONDING TO GESTURES SET             │
│ BY OTHER USERS FOR ACTIVATING ACTION                         │
└─────────────────────────────────────────────────────────────┘
                            │
                            ▼
┌─────────────────────────────────────────────────────────────┐
│ PROVIDE RECOMMENDED GESTURE CORRESPONDING TO ACTION,         │
│ BASED ON INFORMATION ON PLURALITY OF CANDIDATE               │──540
│ GESTURES AND CHANGE APPLICATION SCOPE                        │
└─────────────────────────────────────────────────────────────┘
                            │
                            ▼
                         ( END )
```

# FIG. 6

420
CANDIDATE GESTURE LIST

402

| Action ID | Candidate Gesture_1 | Candidate Gesture_2 | Candidate Gesture_3 |
|---|---|---|---|
| Action_4 | Gesture_1 | Gesture_3 | Gesture_2 |

| Gesture ID mapped to Action_4 | SETTING SCOPE | SETTING ACCOUNT |
|---|---|---|
| Gesture_1 | System | All |
| Gesture_2 | Category_1 | Personal |
| Gesture_3 | Category_1 | All |

610

INFORMATION ON GESTURE TO BE CHANGED
Geture_9(FIST GESTURE)

ACTION INFORMATION
Action_4

CHANGE APPLICATION INFORMATION OF GESTURE TO BE CHANGED
CHANGE APPLICATION SCOPE: Category_1

620

INFORMATION ON GESTURE TO BE CHANGED
Geture_9(FIST GESTURE)

ACTION INFORMATION
Action_4

CANDIDATE GESTURES FOR ACTION_4:
Gesture_1, Gestrue_3, Gesture_2

630

RECOMMENDED GESTURES FOR ACTION_4 BASED ON PRIORITIES:
1. Gesture_2, Gestrue_3
2. Gesture_1

CHANGE APPLICATION SCOPE

# FIG. 7

**CANDIDATE GESTURE LIST** ~420

| Action ID | Candidate Gesture_1 | Candidate Gesture_2 | Candidate Gesture_3 |
|---|---|---|---|
| Action_4 | Gesture_1 | Gesture_3 | Gesture_2 |

402 —

| Gesture ID mapped to Action_4 | SETTING SCOPE | SETTING ACCOUNT |
|---|---|---|
| Gesture_1 | System | All |
| Gesture_2 | Category_1 | Personal |
| Gesture_3 | Category_1 | All |

~710

INFORMATION ON GESTURE TO BE CHANGED
Geture_9(FIST GESTURE)

ACTION INFORMATION
Action_4

CHANGE APPLICATION INFORMATION OF
GESTURE TO BE CHANGED
CHANGE APPLICATION SCOPE: Category_1
CHANGE APPLICATION ACCOUNT: All
CHANGE APPLICATION DURATION:
PERMANENT DURATION

~720

INFORMATION ON GESTURE TO BE CHANGED
Geture_9(FIST GESTURE)

ACTION INFORMATION
Action_4(Mute)

CANDIDATE GESTURES FOR ACTION_4:
Gesture_1, Gestrue_3, Gesture_2

~730

RECOMMENDED GESTURES FOR
ACTION_4 BASED ON PRIORITIES:

1. Gesture_3
2. Gesture_2
3. Gesture_1

CHANGE APPLICATION SCOPE
CHANGE APPLICATION ACCOUNT
CHANGE APPLICATION DURATION

EP 4 772 969 A1

# FIG. 8

800

| GESTURE | | MODIFY GESTURE SAVED BY USER |
|---|---|---|
| GESTURE RECOGNITION —810 | ⊘ | |
| GESTURE ADDITION —820 | | |
| GESTURE MODIFICATION —830 | | |
| GESTURE DELETION —840 | | |

# FIG. 9

GESTURE MODIFICATION — 900

| GESTURE CHANGE APPLICATION SCOPE — 910 | ENTIRE SYSTEM — 911 | CATEGORY APP — 912 | INDIVIDUAL APP — 913 |

| GESTURE CHANGE APPLICATION DURATION — 920 | PERMANENT DURATION — 921 | TEMPORARY DURATION — 922 |

| GESTURE CHANGE APPLICATION ACCOUNT — 930 | ALL USERS — 931 | USER 1 — 932 | USER 2 — 932 |

950
USER 1

# FIG. 10

1000

## GESTURE MODIFICATION

SELECT GESTURE TO MODIFY

1010
Smart TV

1030

| VOLUME UP | MUTE | INITIATE GESTURE RECOGNITION MODE | CHANNEL UP |

1020
YouTube ▶

| CAPTION | SUBSCRIBE TO CHANNEL |

# FIG. 11

GESTURE MODIFICATION — 1100

WE'LL RECOMMEND GESTURE SUITABLE FOR "MUTE"

1030

MUTE

1110

Gesture_1     Gesture_2

# FIG. 12

START

RECEIVE USER INPUT FOR ENTERING GESTURE MODIFICATION MENU —1210

RECEIVE USER INPUT REGARDING CHANGE APPLICATION SCOPE, CHANGE APPLICATION ACCOUNT, CHANGE APPLICATION DURATION OF GESTURE TO BE CHANGED —1220

RECEIVE USER INPUT REGARDING WHETHER TO CHANGE SHAPE OF GESTURE, ATTRIBUTES OF GESTURE, OR ACTION CORRESPONDING TO GESTURE —1230

1410    1810    1910

# FIG. 13

GESTURE MODIFICATION ~1300

1030

MUTE

| GESTURE SHAPE CHANGE ——1310 |
| GESTURE ATTRIBUTE CHANGE ——1320 |
| ACTION CHANGE——1330 |

# FIG. 14

```
          ( START )
              │
              ▼
┌─────────────────────────────┐
│ RECEIVE USER INPUT FOR      │
│ CHANGING SHAPE OF FIRST     │──── 1410
│ GESTURE                     │
└─────────────────────────────┘
              │
              ▼        1420
         ╱─────────╲         NO
        ╱ CHANGE TO ╲─────────────────────────────────┐
        ╲  NEW       ╱                                 │
         ╲ GESTURE? ╱                                  │
          ╲───────╱                                    │
              │ YES                                     ▼       1425
              ▼        1430                    ┌──────────────────────────┐
         ╱─────────╲         NO                │ PROVIDE PREDEFINED       │
        ╱ RECOMMEND ╲────────────────┐         │ GESTURE AS RECOMMENDED   │
        ╲  NEW       ╱                │         │ GESTURE FOR ACTION       │
         ╲ GESTURE? ╱                 │         └──────────────────────────┘
          ╲───────╱                   ▼    1435             │
              │ YES           ┌──────────────────┐          │
              ▼               │ SET GESTURE      │          │
┌─────────────────────────┐  │ OBTAINED VIA     │          │
│ PROVIDE NEW GESTURE AS  │  │ SENSOR AS NEW    │          │
│ RECOMMENDED GESTURE     │  │ GESTURE          │          │
│ FOR ACTION              │  └──────────────────┘          │
└─────────────────────────┘          │                     │
         1440  │                      │                     │
              ▼◄──────────────────────┴─────────────────────┘
┌─────────────────────────┐
│ UPDATE GESTURE DB WITH  │──── 1450
│ CHANGED SECOND GESTURE  │
└─────────────────────────┘
              │
              ▼
          ( END )
```

EP 4 772 969 A1

# FIG. 15

```
                                              ⟋ 1425
┌ ─ ─ ─ ─ ─ ─ ─ ─ ─ ─ ─ ─ ─ ─ ─ ─ ─ ─ ─ ─ ─ ┐
│  ┌─────────────────────────────────────┐  │
│  │   OBTAIN ONE OR MORE CANDIDATE      │  ├── 1510
│  │   GESTURES FOR ACTION CORRESPONDING │  │
│  │   TO FIRST GESTURE                  │  │
│  └─────────────────────────────────────┘  │
│  ┌─────────────────────────────────────┐  │
│  │   DELETE, FROM ONE OR MORE CANDIDATE│  ├── 1520
│  │   GESTURES, CANDIDATE GESTURE NOT   │  │
│  │   CORRESPONDING TO PREDEFINED       │  │
│  │   GESTURE                           │  │
│  └─────────────────────────────────────┘  │
│  ┌─────────────────────────────────────┐  │
│  │   PRIORITIZE CANDIDATE GESTURE SET  │  ├── 1530
│  │   WITHIN SAME SETTING SCOPE AS      │  │
│  │   CHANGE APPLICATION SCOPE OF       │  │
│  │   FIRST GESTURE                     │  │
│  └─────────────────────────────────────┘  │
│  ┌─────────────────────────────────────┐  │
│  │   PROVIDE PREDEFINED GESTURE AS     │  ├── 1540
│  │   RECOMMENDED GESTURE BASED ON      │  │
│  │   PRIORITY                          │  │
│  └─────────────────────────────────────┘  │
└ ─ ─ ─ ─ ─ ─ ─ ─ ─ ─ ─ ─ ─ ─ ─ ─ ─ ─ ─ ─ ─ ┘
```

# FIG. 16

```
                                              ┌─── 1435
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│                                                                │
│   ┌──────────────────────────┐── 1610                          │
│   │   OBTAIN USER'S GESTURE   │◄──────────────────────┐        │
│   │       VIA SENSOR          │                       │        │
│   └──────────────────────────┘                        │  ── 1625│
│                │                     ┌─────────────────┴──────┐ │
│                ▼          ── 1620    │ REQUEST USER TO INPUT   │ │
│              ╱   ╲                   │    ANOTHER GESTURE      │ │
│            ╱       ╲     YES         └────────────────────────┘ │
│   SIMILARITY BETWEEN USER'S ──────────────────────┘            │
│   GESTURE AND PREDEFINED GESTURE ≥                             │
│            ╲ THRESHOLD VALUE? ╱                                 │
│              ╲   ╱                                              │
│                │ NO                                             │
│                ▼                                               │
│   ┌──────────────────────────┐── 1630                          │
│   │    SET USER'S GESTURE AS  │                                │
│   │        NEW GESTURE        │                                │
│   └──────────────────────────┘                                │
│                │                                               │
└ ─ ─ ─ ─ ─ ─ ─ ─│─ ─ ─ ─ ─ ─ ─ ─ ─ ─ ─ ─ ─ ─ ─ ─ ─ ─ ─ ─ ─ ─ ─ ┘
                 ▼
```

# FIG. 17

| INPUT GESTURE | Gesture Similarity Score | Max Similarity |
|---|---|---|
| | Gesture_1(0.98)<br>Gesture_2(0.04)<br>Gesture_3(0.02) ··· | 0.98 |
| | Gesture_1(0.05)<br>Gesture_2(0.96)<br>Gesture_3(0.00) ··· | 0.96 |
| | Gesture_1(0.09)<br>Gesture_2(0.25)<br>Gesture_3(0.45) ··· | 0.45 |

# FIG. 18A

```
        ( START )
            │
            ▼
┌────────────────────────────────────┐
│   RECEIVE USER INPUT FOR CHANGING   │──── 1810
│      ATTRIBUTES OF FIRST GESTURE    │
└────────────────────────────────────┘
            │
            ▼
┌────────────────────────────────────┐
│ CHANGE AT LEAST ONE OF RECOGNITION  │
│ INTERVAL DURATION OF FIRST GESTURE, │──── 1820
│ MOVEMENT DIRECTION, OR COMBINATION  │
│       WITH PREVIOUS GESTURE         │
└────────────────────────────────────┘
            │
            ▼
┌────────────────────────────────────┐
│ UPDATE CHANGED ATTRIBUTES OF FIRST  │──── 1830
│              GESTURE                │
└────────────────────────────────────┘
            │
            ▼
         (  END  )
```

# FIG. 18B

| Gesture_ID | Recognition Interval ⟋1830 | Direction ⟋1840 | Pre_Cond ⟋1850 |
|---|---|---|---|
| Gesture_1 | 0 | N/A | N/A |
| Gesture_2 | 0.5 | Right | Gesture_1 |
| Gesture_3 | 2 | Up | N/A |
| Gesture_4 | 0 | N/A | N/A |
| Gesture_5 | 0.5 | Down | Gesture_4 |
| ... | ... | ... | ... |

# FIG. 19

```
        START
          │
          ▼
┌─────────────────────────────────┐
│  RECEIVE USER INPUT FOR CHANGING FIRST  │── 1910
│  ACTION CORRESPONDING TO FIRST GESTURE  │
└─────────────────────────────────┘
          │
          ▼
┌─────────────────────────────────┐
│     PROVIDE ONE OR MORE CANDIDATE       │── 1920
│        ACTIONS FOR FIRST GESTURE        │
└─────────────────────────────────┘
          │
          ▼
┌─────────────────────────────────┐
│      UPDATE CHANGED SECOND ACTION       │── 1930
└─────────────────────────────────┘
          │
          ▼
         END
```

# FIG. 20

ELECTRONIC DEVICE — 100

SERVER — 200

EXTERNAL ELECTRONIC DEVICE — 200

2011 TRANSMIT INFORMATION STORED IN GESTURE DB

2012 TRANSMIT INFORMATION STORED IN GESTURE DB

GENERATE, BASED ON INFORMATION STORED IN GESTURE DB, CANDIDATE ACTION LIST FOR EACH GESTURE, INCLUDING ACTIONS HAVING HIGH MAPPING FREQUENCY FOR EACH GESTURE — 2020

GENERATE, BASED ON INFORMATION STORED IN GESTURE DB, CANDIDATE GESTURE LIST FOR EACH ACTION, INCLUDING GESTURES HAVING HIGH MAPPING FREQUENCY FOR EACH ACTION — 2030

2041 TRANSMIT CANDIDATE ACTION LIST AND/ OR CANDIDATE GESTURE LIST

2042 TRANSMIT CANDIDATE ACTION LIST AND/ OR CANDIDATE GESTURE LIST

# FIG. 21

2100

2110    2101

TUNER    PROCESSOR

2120 — COMMUNICATOR
2121 — WIRELESS LAN
2122 — BLUETOOTH
2123 — WIRED ETHERNET

2130 — DETECTOR
2131 — MICROPHONE
2132 — SENSOR
2133 — OPTICAL RECEIVER

2140 — INPUT/OUTPUT (I/O) INTERFACE
2141 — HDMI
2142 — COMPONENT
2143 — PC
2144 — USB

VIDEO PROCESSOR — 2150

DISPLAY — 2160

AUDIO PROCESSOR — 2170

AUDIO OUTPUT INTERFACE — 2180
SPEAKER — 2181
HEADPHONE — 2182
S/PDIF — 2183

USER INPUT INTERFACE — 2190

SERVER — 200

DISPLAY DEVICE — 300

REMOTE CONTROL DEVICE — 400

MEMORY — 2102
FEATURE EXTRACTION MODULE — 2103
GESTURE RECOGNITION MODULE — 2104
GESTURE/ACTION MODIFICATION MODULE — 2105
UPDATE MODULE — 2106

## INTERNATIONAL SEARCH REPORT

| International application No. |
| --- |
| **PCT/KR2024/010268** |

| A. | CLASSIFICATION OF SUBJECT MATTER |
| --- | --- |

**G06F 3/01**(2006.01)i; **G06F 3/00**(2006.01)i; **G06F 3/0484**(2013.01)i

According to International Patent Classification (IPC) or to both national classification and IPC

| B. | FIELDS SEARCHED |
| --- | --- |

Minimum documentation searched (classification system followed by classification symbols)

G06F 3/01(2006.01); B60W 50/08(2006.01); G06F 3/16(2006.01); G06T 7/00(2006.01); G06T 7/20(2006.01); H04L 9/40(2022.01); H04N 21/4223(2011.01); H04N 5/44(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제스처(gesture), 변경(change), 범위(scope), 추천(recommendation)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2023-0029055 A (SAMSUNG ELECTRONICS CO., LTD.) 03 March 2023 (2023-03-03)<br>See paragraphs [0110]-[0135]; claim 1; and figures 6-7. | 1-15 |
| A | KR 10-2023-0091322 A (SAMSUNG ELECTRONICS CO., LTD.) 23 June 2023 (2023-06-23)<br>See paragraphs [0207]-[0219]; claim 1; and figure 13. | 1-15 |
| A | KR 10-2013-0071241 A (HYUNDAI MOTOR COMPANY) 28 June 2013 (2013-06-28)<br>See paragraphs [0023]-[0029]; and figures 3-5. | 1-15 |
| A | KR 10-2017-0093300 A (MOGENCELAB CO., LTD.) 16 August 2017 (2017-08-16)<br>See claims 1-4. | 1-15 |
| A | JP 2022-168963 A (HITACHI LTD.) 09 November 2022 (2022-11-09)<br>See claims 1-8. | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 October 2024** | **18 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/010268**

| Patent document cited in search report | | | Publication date (day/month/year) | Patent family member(s) | | | Publication date (day/month/year) |
|---|---|---|---|---|---|---|---|
| KR | 10-2023-0029055 | A | 03 March 2023 | WO | 2023-027377 | A1 | 02 March 2023 |
| KR | 10-2023-0091322 | A | 23 June 2023 | WO | 2023-113502 | A1 | 22 June 2023 |
| KR | 10-2013-0071241 | A | 28 June 2013 | | None | | |
| KR | 10-2017-0093300 | A | 16 August 2017 | | None | | |
| JP | 2022-168963 | A | 09 November 2022 | | None | | |

Form PCT/ISA/210 (patent family annex) (July 2022)